# EUROPEAN PATENT APPLICATION

(11) **EP 4 374 987 A1**
(43) Date of publication of application: **29.05.2024**
(21) Application number: 21947034.1
(22) Date of filing: 22.06.2021
(51) Int. Cl.: B22D 17/22, B22C 9/06, B22C 9/24

(54) **MOLD AND BLADE MEMBER**

(71) Applicant: NIKON CORPORATION, Minato-ku Tokyo 108-6290 (JP)
(72) Inventor: ICHINOSE, Go, Tokyo 108-6290 (JP)
(74) Representative: Hoffmann Eitle
(86) International application number: PCT/JP2021/023560
(87) International publication number: WO 2022/269747

(57) **Abstract**

A mold used to mold a molded product includes a mold surface that contacts a material, a plurality of convex structures are formed on the mold surface, at least one of a corner part of a first convex structure among the plurality of convex structures and a boundary part between adjacent first and second convex structures among the plurality of convex structures includes a curved surface, in a case where a radius of curvature of the curved surface included in at least one of the corner part and the boundary part is R, a pitch of the convex structures is P, and a height of the convex structures is H, a condition "1 micrometer < R < 4 micrometers" is satisfied, and at least one of a condition "5 micrometers < P < 200 micrometers" and a third "2.5 micrometers < H < 100 micrometers" is satisfied.

## Description

### Technical Field

The present invention relates to a technical field of a mold that is used to mold a molded product, and a blade member such as a blade or vane, for example.

### Background Art

A Patent Literature 1 discloses, as one example of an object on a surface of which a concavity and convexity is formed, an airplane having an airframe and the like on a surface of which a riblet structure is formed. In this case, it is required to properly manufacture an object on a surface of which a concavity and convexity is formed.

### Citation List

### Patent Literature

Patent Literature 1: US2017/0144255A1

### Summary of Invention

A first aspect provides a mold that is used to mold, by an injection molding using a meltable material, an injection molded product having a blade that is placed in fluid, wherein the mold comprises a mold surface that contacts the material, on the mold surface, a plurality of convex structures, each of which extends along a first direction and each of which protrudes toward a second direction that intersects with the first direction, are formed to be arranged along a third direction that intersects with the first direction and the second direction, at least one of a corner part of a first convex structure among the plurality of convex structures and a boundary part between the first convex structure and a second convex structure, which are adjacent to each other along the third direction, among the plurality of convex structures includes a curved surface, in a case where a radius of curvature of the curved surface included in at least one of the corner part and the boundary part is R, a pitch of the plurality of convex structures is P, and a height from the boundary part of the plurality of convex structures protruding toward the second direction is H, a first condition "1 micrometer < R < 4 micrometers" is satisfied, and at least one of a second condition "5 micrometers < P < 200 micrometers" and a third condition "2.5 micrometers < H < 100 micrometers" is satisfied.

A second aspect provides a blade member, wherein a plurality of convex structures, each of which extends along a first direction and each of which protrudes toward a second direction that intersects with the first direction, are formed to be arranged along a third direction that intersects with the first direction and the second direction, the blade member includes: a first area in which the plurality of convex structures are formed; a second area in which the plurality of convex structures are not formed; and a third area which is located between the first area and the second area along the first direction and in which a plurality of other convex structures respectively connected to the plurality of convex structures are formed, the plurality of other convex structures extend from the first area toward the second area, a height of at least one of the plurality of other convex structures becomes lower as it is closer to the second area, in a case where a pitch of the plurality of convex structures is P, and a height of the plurality of convex structures protruding toward the second direction is H, at least one of a first condition "5 micrometers < P < 200 micrometers" and a second condition "2.5 micrometers < H < 100 micrometers" is satisfied.

A third aspect provides a blade member, wherein a plurality of convex structures, each of which extends along a first direction and each of which protrudes toward a second direction that intersects with the first direction, are formed to be arranged along a third direction that intersects with the first direction and the second direction, the blade member includes: a first area in which the plurality of convex structures are formed; a fourth area in which the plurality of convex structures are not formed; and a fifth area which is located between the first area and the fourth area along the third direction, an inclination angle between a surface of the fifth area and an axis along the second direction is larger than an inclination angle between side surfaces of the plurality of convex structures and an axis along the second direction, in a case where a pitch of the plurality of convex structures is P, and a height of the plurality of convex structures protruding toward the second direction is H, at least one of a first condition "5 micrometers < P < 200 micrometers" and a second condition "2.5 micrometers < H < 100 micrometers" is satisfied.

### Brief Description of Drawings

[FIG. 1] FIG. 1 is a cross-sectional view that schematically illustrates an entire configuration of a processing system in a present example embodiment.
[FIG. 2] FIG. 2 is a system configuration diagram that illustrates a system configuration of the processing system in the present example embodiment.
[FIG. 3] FIG. 3 is a perspective view that illustrates an exterior appearance of a turbine.
[FIG. 4] FIG. 4 is a perspective view that illustrates an exterior appearance of a turbine blade.
[FIG. 5] FIG. 5 illustrates a configuration of the turbine blade.
[FIG. 6] FIG. 6A is a perspective view that illustrates a riblet structure, FIG. 6B is a cross-sectional view that illustrates the riblet structure (a VI-VI' cross-sectional view in FIG. 6A), and FIG. 6C is a top view that illustrates the riblet structure.
[FIG. 7] FIG. 7 is a cross-sectional view that illustrates the turbine blade.
[FIG. 8] FIG. 8 is a cross-sectional view that illustrates a mold for manufacturing the turbine blade illustrated in FIG. 7.
[FIG. 9] FIG. 9A is a perspective view that illustrates a mold structure formed on the mold, and FIG. 9B is a cross-sectional view that illustrates the mold structure formed on the mold.
[FIG. 10] FIG. 10 is a cross-sectional view that illustrates a relationship between the riblet structure and the mold structure.
[FIG. 11] FIG. 11A is a perspective view that illustrates the mold structure in which at least one of a corner part and a boundary part includes a curved surface, and FIG. 11B is a cross-sectional view that illustrates the mold structure in which at least one of the corner part and the boundary part includes the curved surface.
[FIG. 12] FIG. 12A is a perspective view that illustrates the riblet structure formed by using the mold structure illustrated in FIG. 11A and FIG. 11B, and FIG. 12B is a cross-sectional view that illustrates the riblet structure formed by using the mold structure illustrated in FIG. 11A and FIG. 11B.
[FIG. 13] FIG. 13A is a perspective view that illustrates a first terminal structure, and FIG. 13B is a cross-sectional view that illustrates the first terminal structure (a A-A' cross-sectional view in FIG. 13A).
[FIG. 14] FIG. 14A is a perspective view that illustrates a part of the turbine blade formed by using the mold in which the first terminal structure illustrated in FIG. 13A and FIG. 13B is formed, and FIG. 14B is a cross-sectional view (a B-B' cross-sectional view in FIG. 14A) that illustrates a part of the turbine blade formed by using the mold in which the first terminal structure illustrated in FIG. 13A and FIG. 13B is formed.
[FIG. 15] FIG. 15A is a perspective view that illustrates a second terminal structure, and FIG. 15B is a cross-sectional view that illustrates the second terminal structure (a A-A' cross-sectional view in FIG. 15A).
[FIG. 16] FIG. 16A is a perspective view that illustrates a part of the turbine blade formed by using the mold in which the second terminal structure illustrated in FIG. 15A and FIG. 15B is formed, and FIG. 16B is a cross-sectional view that illustrates a part of the turbine blade formed by using the mold in which the second terminal structure illustrated in FIG. 15A and FIG. 15B is formed.
[FIG. 17] FIG. 17 is a block diagram that illustrates a configuration of a design apparatus.
[FIG. 18] FIG. 18 is a flowchart that illustrates a flow of a design operation performed by the design apparatus.
[FIG. 19] FIG. 19 illustrates a design GUI.
[FIG. 20] FIG. 20 illustrates an input screen included in the design GUI.
[FIG. 21] FIG. 21 illustrates a database that is used for calculating a characteristic of the riblet structure based on design information.
[FIG. 22] FIG. 22 illustrates an output screen included in the design GUI.
[FIG. 23] FIG. 23 is a block diagram that illustrates a configuration of a processing optical system of a processing system in a first modified example.
[FIG. 24] FIG. 24 is a planar view that illustrates a plurality of processing lights with which the turbine blade is irradiated.
[FIG. 25] FIG. 25 is a planar view that illustrates a plurality of processing lights with which the turbine blade is irradiated.
[FIG. 26] FIG. 26 is a planar view that illustrates a plurality of processing lights with which the turbine blade is irradiated.
[FIG. 27] FIG. 27 is a planar view that illustrates a plurality of processing lights with which the turbine blade is irradiated.
[FIG. 28] FIG. 28 schematically illustrates a processing system that performs a post-processing.
[FIG. 29] FIG. 29 is a block diagram that illustrates a configuration of a processing optical system of a processing system in a second modified example.
[FIG. 30] FIG. 30 is a cross-sectional view that illustrates a modified example of the riblet structure.

### Description of Embodiments

Next, with reference to drawings, an example embodiment of a mold, a molded product, a blade member, a component, and a manufacturing method will be described. In the below-described description, the example embodiment of the mold, the molded product, the blade member, the component, and the manufacturing method will be described by using a processing system SYS that is configured to perform a processing process using processing light EL. However, the present invention is not limited to the below-described example embodiment.

Moreover, in the below described description, a positional relationship of various components that constitute the processing system SYS will be described by using an XYZ rectangular coordinate system that is defined by a X axis, a Y axis and a Z axis that are perpendicular to one another. Note that each of an X axis direction and a Y axis direction is assumed to be a horizontal direction (namely, a predetermined direction in a horizontal plane) and a Z axis direction is assumed to be a vertical direction (namely, a direction that is perpendicular to the horizontal plane, and substantially an up-down direction), for the purpose of simple description, in the below-described description. Moreover, rotational directions (in other words, inclination directions) around the X axis, the Y axis and the Z axis are referred to as a θX direction, a θY direction and a θZ direction, respectively. Here, the Z axis direction may be a gravity direction. An XY plane may be a horizontal direction.

### (1) Configuration of Processing System SYS

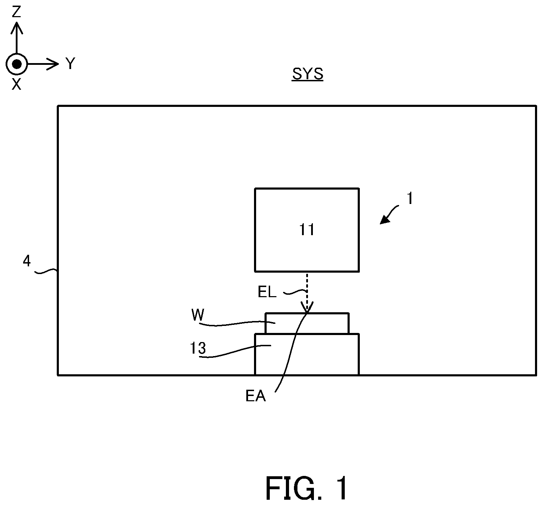

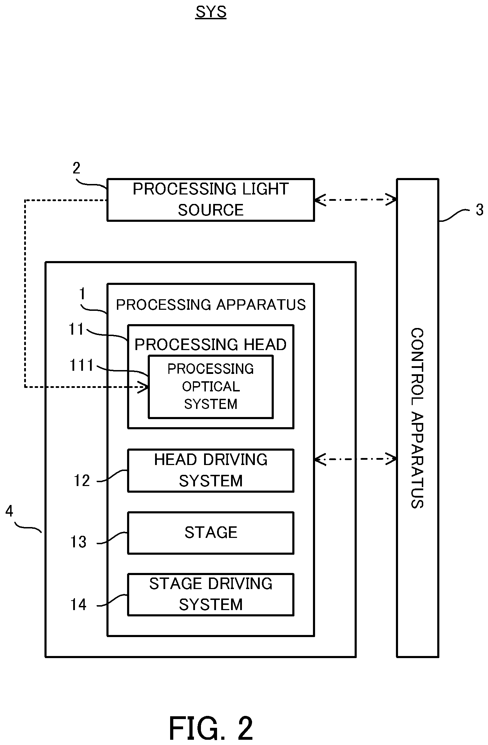

Firstly, with reference to FIG. 1 and FIG. 2, a configuration of the processing system SYS in a present example embodiment will be described. FIG. 1 is a cross-sectional view that schematically illustrates the configuration of the processing system SYS in the present example embodiment. FIG. 2 is a system configuration diagram that illustrates a system configuration of the processing system SYS in the present example embodiment.

As illustrated in FIG. 1 and FIG. 2, the processing system SYS includes a processing apparatus 1, a processing light source 2, and a control apparatus 3. At least a part of the processing apparatus 1 is contained in an inner space in a housing 4. The inner space in the housing 4 may be purged by a purge gas such as a Nitrogen gas and so on, or may not be purged by the purge gas. The inner space in the housing may be vacuumed or may not be vacuumed. However, the processing apparatus 1 may not be contained in the inner space in the housing 4. Namely, the processing system SYS may not include the housing 4 for containing the processing apparatus 1.

The processing apparatus 1 is configured to process a workpiece W, which is a processing target object (it may be referred to as a base member), under the control of the control apparatus 3. The workpiece W may be a metal, may be an alloy (for example, a duralumin and the like), may be a semiconductor (for example, a silicon), may be a resin, may be a composite material such as a CFRP (Carbon Fiber Reinforced Plastic), a painting material (as one example, a painting layer that coats a base material), may be a glass or may be an object that is made from any other material, for example.

A surface of the workpiece W may be coated with a coat of material that is different from the workpiece W. In this case, a surface of the coat coating the surface of the workpiece W may be a surface that is to be processed by the processing apparatus 1. Even in this case, the processing apparatus 1 may be regarded to process the workpiece W (namely, process the workpiece W coated with the coat).

The processing apparatus 1 irradiates the workpiece W with processing light EL in order to process the workpiece W. The processing light EL may be any type of light, as long as the workpiece W is processed by irradiating the workpiece W with it. In the present example embodiment, an example in which the processing light EL is laser light will be described, however, the processing light EL may be light that is different from the laser light. Furthermore, a wavelength of the processing light EL may be any wavelength, as long as the workpiece W is processed by irradiating the workpiece W with it. For example, the processing light EL may be visible light, or may be invisible light (for example, at least one of infrared light, ultraviolet light, extreme ultraviolet light and the like). The processing light EL may include pulsed light (for example, pulsed light an ON time of which is equal to or shorter than pico-seconds). Alternatively, the processing light EL may not include the pulsed light. In other words, the processing light EL may be continuous light.

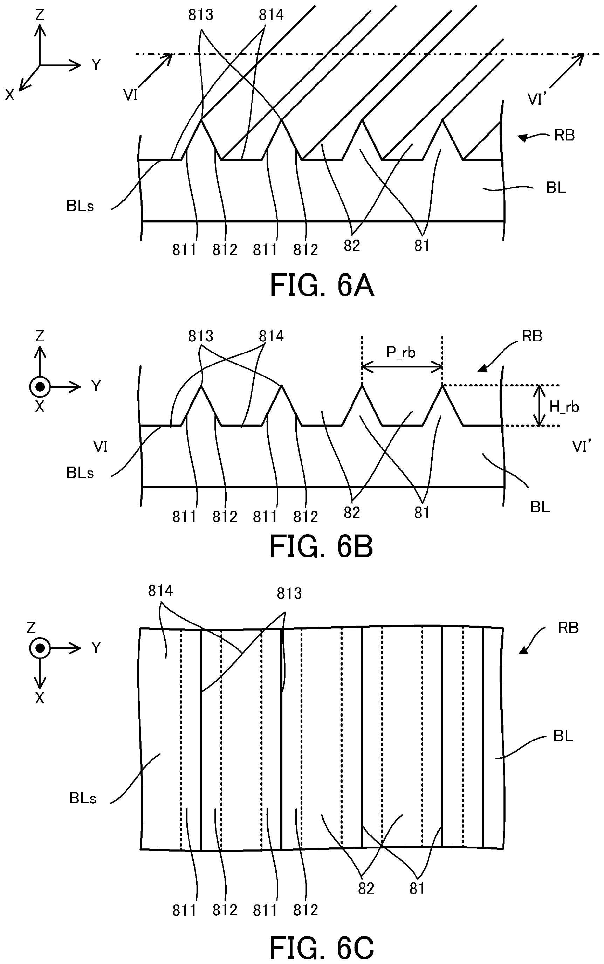

The processing apparatus 1 may perform a removal processing for removing a part of the workpiece W by irradiating the workpiece W with the processing light EL. In the present example embodiment, the processing apparatus 1 forms a riblet structure RB, which will be described later in detail with reference to FIG. 6, on the surface of the workpiece W by performing the removal processing. The riblet structure RB may include a structure by which a resistance (especially, at least one of a frictional resistance and a turbulent frictional resistance) of the surface of the workpiece W to fluid is reducible. Thus, the riblet structure RB may be formed on the workpiece W having a member that is placed (in other words, located) in the fluid. Note that the fluid here means any medium (for example, at least one of gas and liquid) that flows relative to the surface of the workpiece W. For example, the medium may be referred to as the fluid in the case where the surface of workpiece W moves relative to the medium although the medium itself is static. Note that a state where the medium is static may mean a state where the medium does not move relative to a predetermined reference object (for example, a ground surface).

In a case where a riblet structure RB, which includes the structure by which the resistance (especially, at least one of the frictional resistance and the turbulent frictional resistance) of the surface of the workpiece W to the fluid is reducible, is formed on the workpiece W, the workpiece W is movable relative to the fluid more easily. Thus, the resistance that prevents the workpiece W from moving relative to the fluid is reduced, and thereby an energy saving is achievable. Namely, it is possible to manufacture the environmentally preferable workpiece W. For example, in a case where the riblet structure RB is formed on a below-described turbine blade BL, the resistance that prevents the turbine blade BL from moving (typically, rotating) is reduced, which leads to the energy savings of an apparatus (for example, a turbine T) using the turbine blade BL. Namely, it is possible to manufacture the environmentally preferable turbine blade BL (turbine T).

The turbine blade BL is one example of the workpiece W on which the riblet structure RB is formed. In this case, the processing apparatus 1 may form the riblet structure RB on a surface of the turbine blade BL by processing the turbine blade BL. The turbine blade BL is a member that is used in the turbine T. Note that the member may be referred to as a component. The turbine blade BL is at least a part of the turbine T. In other words, the turbine blade BL is a blade-shaped member that serve as a blade of the turbine T placed in the fluid. Thus, the turbine blade BL may be referred to as a blade member.

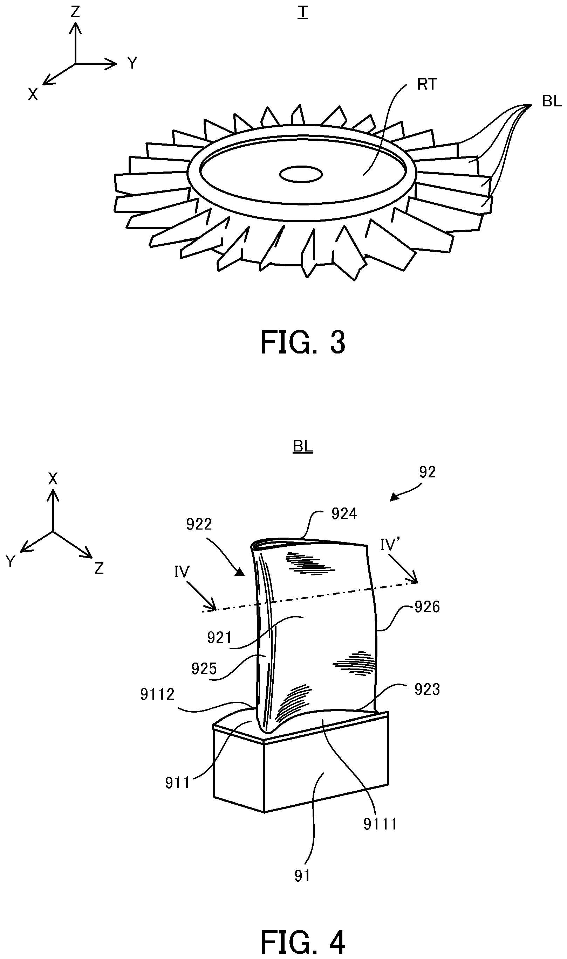

FIG. 3 and FIG. 4 illustrate one example of the turbine T. FIG. 3 is a perspective view that illustrates an exterior appearance of the turbine T. FIG. 4 is a perspective view that illustrates an exterior appearance of the turbine blade BL. As illustrated in FIG. 3 and FIG. 4, the turbine T includes a plurality of turbine blades BL. The turbine blade BL includes: a shank 91; and a blade body 92 that is connected to the shank 91 and that extends from the shank 91 outwardly along radial direction of the turbine T. At least one of the shank 91 and the blade body 92 may be formed by a single metal. At least one of the shank 91 and the blade body 92 may be formed by a plurality of metals. At least one of the shank 91 and the blade body 92 may be manufactured by an existing manufacturing method (for example, a manufacturing using at least one of a molding, a forging, an additive manufacturing, a removal processing and a machine processing). The shank 91 and the blade body 92 may be manufactured integrally. Alternatively, the shank 91 and the blade body 92, which are manufactured separately, may be jointed with each other by an existing coupling method (for example, a jointing method using at least one of a welding, a brazing, an adhesive bonding and so on). The plurality of shanks 91 which the plurality of turbine blades BL include, respectively, may be jointed with each other. The plurality of shanks 91 jointed with each other may constitute at least a part of a rotatable rotor RT. The rotor RT and the turbine blade BL may be formed integrally.

The blade body 92 extends outwardly from a platform 911 of the shank 91 along the radial direction of the turbine T. The platform 911 includes a positive pressure side platform 9111 and a negative pressure side platform 9112. The blade body 92 includes: a pressure surface 921; a suction surface 922 that faces toward a side opposite to a side toward which the pressure surface 921 faces, a root part 923 that is jointed with the shank 91; and a tip part 924 that constitute an end part located at a side opposite to the root part 923. The blade body 92 further includes: a leading edge surface 925 that is located between the pressure surface 921 and the suction surface 922; and a trailing edge surface 926 that is located between the pressure surface 921 and the suction surface 922 at a side opposite to the leading edge surface 925. At least one surface of the pressure surface 921, the suction surface 922, the leading edge surface 925 and the trailing edge surface 926 may include a curved surface. For example, in an example illustrated in FIG. 4, a surface of each of the pressure surface 921 and the suction surface 922 includes the curved surface.

The turbine T is rotatable by using a flow of fluid that is supplied to the turbine T. Specifically, the fluid (for example, at least one of water, steam, air, and gas) is supplied to the turbine T. The fluid that has been supplied to the turbine T flows along the surface of each of the plurality of turbine blades BL. Thus, the turbine blade BL is used in the fluid. As a result, a kinetic energy of the fluid is converted into a rotational energy of the turbine T by the plurality of turbine blades BL. At least one of a steam turbine using the steam as the fluid and a gas turbine using the gas as the fluid is one example of the turbine T. At least one of a hydraulic turbine using the water as the fluid and a wind turbine using the air as the fluid is another example of the turbine T. Moreover, the turbine T may generate the flow of the fluid by the rotation thereof.

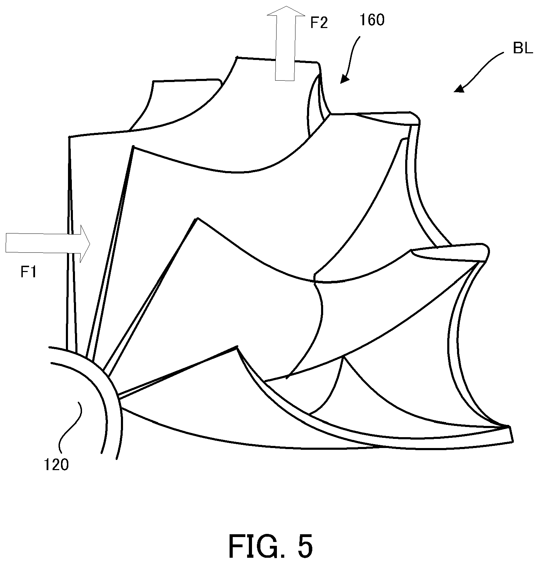

The turbine T illustrated in FIG. 3 and FIG. 4 includes an axial flow type turbine blades BL. Namely, the turbine T illustrated in FIG. 3 and FIG. 4 is an axial flow turbine. However, the turbine T may be a radial flow turbine (namely, a radial turbine), as illustrated in FIG. 5. In the radial flow turbine, the fluid flow in the turbine blades BL parallel to a rotational axis 120 of the turbine blades BL, and flows out from an outlet portion 160 in a direction intersecting with the rotational axis 120, as indicated by arrows F1 and F2 in FIG. 5.

In the below-described description, for convenience of description, an example in which the workpiece W is the turbine blade BL will be described. However, the workpiece W is not limited to the turbine blade BL. Namely, the riblet structure RB may be formed on the workpiece W different from the turbine blade BL. Any member that relatively moves relative to the medium (for example, the fluid) is another example of the workpiece W on which the riblet structure RB is formed. For example, the workpiece W may be at least a part of a turbine vane. Namely, in addition to or instead of the turbine blade BL that constitutes the blade member that may be referred to as a rotor blade, the turbine vane that constitutes the blade member that may be referred to as a stator vane may be used as the workpiece W. For example, the workpiece W may be a member of the turbine W (for example, a member placed in the fluid) that is different from the blade member. Namely, the workpiece W may be any member (for example, the member placed in the fluid) used in the turbine W. For example, the workpiece W may be the turbine T itself (for example, the turbine T illustrated in FIG. 3 to FIG. 5) or at least part of the turbine T. For example, the workpiece W may be a fan, an impeller, a propeller, or a pump itself. For example, the workpiece W may be at least a part of the fan, the impeller, the propeller, or the pump. For example, the workpiece W may be a member (for example, the member placed in the fluid) used in the fan, the impeller, the propeller, or the pump. For example, the workpiece W may be at least a blade member of the fan, the impeller, the propeller, or the pump propeller. The fan is a member (typically, a rotatable body) that is used in a blower or the like and that forms a flow of gas. The propeller is a member (typically a rotatable body) that converts rotational force outputted from a prime mover including at least one of an engine and a motor, into driving force for a movable object including at least one of an airplane, a ship and the like, for example. The impeller is a member that is used in a pump and that is a rotational blade rotatable so as to generate force to pump (alternatively, suck) the fluid by the pump, for example. For example, the workpiece W may be at least a part of a stationary separator plate that is disposed around the impeller. For example, the workpiece W may be at least part of a body (for example, an airframe or a hull) of the movable object including at least one of the airplane, the ship and so on. For example, the workpiece W may be at least a part of a wing part (so-called wing) of a flying object such as the airplane.

The workpiece W may include a casing. Namely, the riblet structure RB may be formed on at least a part of the casing. For example, in a case where the casing is used in the turbine T, the riblet structure RB may be formed on at least a part of an inner wall surface of the casing that serves as a wall member that faces at least one of a containing space for containing the turbine blade BL (namely, the rotor blade) and a passageway through which the fluid flows. For example, in a case where the casing is used in the pump, the riblet structure RB may be formed on at least a part of an inner wall surface of the casing that serve as a wall member that faces at least one of a containing space for containing the impeller and a passageway through which the fluid flows. For example, in a case where the casing is used to contain the fan, the propeller, or the pump, the riblet structure RB may be formed on at least a part of an inner wall of the casing that serves as a wall member that faces at least one of a containing space for containing the fan, the propeller, or the pump and a passageway through which the fluid (for example, refrigerant) flows.

The workpiece W may be a blade (namely, a blade) of a windmill used for wind power generation. Namely, the riblet structure RB may be formed on the blade of the windmill. Especially, the riblet structure RB may be formed on the blade of the windmill to generate clean energy (alternatively, natural or renewable energy) with low environmental impact. In this case, energy efficiency can be improved.

Alternatively, the processing apparatus 1 may perform an additive manufacturing for adding new structural object to the workpiece W by irradiating the workpiece W with the processing light EL, in addition to or instead of the removal processing. In this case, the processing apparatus 1 may form the above-described riblet structure RB on the surface of the workpiece W by performing the additive manufacturing. Alternatively, the processing apparatus 1 may perform a machine processing for processing the workpiece W by making a tool contact with the workpiece W, in addition to or instead of at least one of the removal processing and the additive manufacturing. In this case, the processing apparatus 1 may form the above-described riblet structure RB on the surface of the workpiece W by performing the machine processing.

The processing light EL is supplied to the processing apparatus 1 from the processing light source 2, which is configured to generate the processing light EL, through a non-illustrated light transmission member (for example, at least one of an optical fiber and a mirror). The processing apparatus 1 irradiates the workpiece W with the processing light EL supplied from the processing light source 2.

In order to process the workpiece W, the processing apparatus 1 includes: a processing head 11; a head driving system 12; a stage 13, and a stage driving system 14.

The processing head 1 irradiates the workpiece W with the processing light EL from the processing light source 2. In order to irradiate the workpiece W with the processing light EL, the processing head 11 includes a processing optical system 111. The processing head 11 irradiates the workpiece W with the processing light EL through the processing optical system 111. The processing optical system 111 may condenses the processing light EL onto the surface of the workpiece W, for example. The processing optical system 111 may control an optical characteristic of the processing light EL, for example. At least one of an intensity of the processing light EL, a temporal variation of the intensity of the processing light EL, a condensed position of the processing light EL, an incident angle of the processing light EL relative to the workpiece W, a shape of the processing light EL in an optical plane intersecting with an optical axis of the processing optical system 111, an intensity distribution of the processing light EL in the optical plane, and the number of pulses of the processing light (in a case where the processing light is the pulsed light) is one example of the optical characteristic of the processing light EL.

The head driving system 12 moves the processing head 11 along at least one of the X-axis direction, the Y-axis direction, and the Z-axis direction under the control of the control apparatus 3. Note that the head driving system 12 may move the processing head 11 along at least one of the θX direction, the θY direction, and the θZ direction, in addition to or instead of at least one of the X-axis direction, the Y-axis direction, and the Z-axis direction. When the processing head 11 moves, a positional relationship between the stage 13 (furthermore, the workpiece W placed on the stage 13) and the processing head 11 changes. Furthermore, when the positional relationship between the processing head 11 and each of the stage 13 and the workpiece W changes, an irradiation position of the processing light EL on the workpiece W changes.

The workpiece W is placed on the stage 13. The stage 13 may not hold the workpiece W placed on the stage 13. Namely, the stage 13 may not apply, to the workpiece W placed on the stage 13, a holding force for holding the workpiece W. Alternatively, the stage 13 may hold the workpiece W placed on the stage 13. Namely, the stage 13 may apply, to the workpiece W placed on the stage 13, the holding force for holding the workpiece W. For example, the stage 13 may hold the workpiece W by vacuum-sucking and / or electrostatic-sucking the workpiece W. Alternatively, a jig for holding the workpiece W may hold the workpiece W, and the stage 13 may hold the jig holding the workpiece W.

The stage driving system 14 moves the stage 13 under the control of the control apparatus 3. Specifically, the stage driving system 14 moves the stage 13 relative to the processing head 11. For example, the stage driving system 14 may move the stage 13 along at least one of the X-axis direction, the Y-axis direction, the Z-axis direction, the θX direction, the θY direction, and the θZ direction under the control of the control apparatus 3. Note that moving the stage along at least one of the θX direction, the θY direction, and the θZ direction may be regarded to be equivalent to changing an attitude of the stage 13 (furthermore, the workpiece W placed on the stage 13) around at least one of the X-axis, the Y-axis, and the Z-axis. Alternatively, moving the stage along at least one of the θX direction, the θY direction, and the θZ direction may be regarded to be equivalent to rotating (or rotationally moving) the stage 13 around at least one of the X-axis, the Y-axis, and the Z-axis.

When the stage 13 moves, the positional relationship between the stage 13 (furthermore, the workpiece W placed on the stage 13) and the processing head 11 changes. Furthermore, when the positional relationship between the processing head 11 and each of the stage 13 and the workpiece W changes, the irradiation position of the processing light EL on the workpiece W changes.

The control apparatus 3 controls the operation of the processing system SYS. For example, the control apparatus 3 may generate processing control information for processing the workpiece W and control the processing apparatus 1 based on the processing control information so that the workpiece W is processed based on the generated processing control information. Namely, the control apparatus 3 may control the processing of the workpiece W.

The control apparatus 3 may include an arithmetic apparatus and a storage apparatus, for example. The arithmetic apparatus may include at least one of a CPU (Central Processing Unit) and a GPU (Graphical Processing Unit), for example. The control apparatus 3 serves as an apparatus for controlling the operation of the processing system SYS by means of the arithmetic apparatus executing a computer program. The computer program is a computer program that allows the control apparatus 3 (for example, the arithmetic apparatus) to perform (namely, to perform) a below described operation that should be performed by the control apparatus 3. Namely, the computer program is a computer program that allows the control apparatus 3 to function so as to make the processing system SYS perform the below described operation. The computer program executed by the arithmetic apparatus may be recorded in the storage apparatus (namely, a recording medium) of the control apparatus 3, or may be recorded in any recording medium (for example, a hard disk or a semiconductor memory) that is built in the control apparatus 3 or that is attachable to the control apparatus 3. Alternatively, the arithmetic apparatus may download the computer program that should be executed from an apparatus disposed at the outside of the control apparatus 3 through a network interface.

The control apparatus 3 may not be disposed in the processing system SYS, and may be disposed at the outside of the processing system SYS as a server or the like. In this case, the control apparatus 3 may be connected to the processing system SYS through a wired and / or wireless network (alternatively, a data bus and / or a communication line). A network using a serial-bus-type interface such as at least one of IEEE1394, RS-232x, RS-422, RS-423, RS-485 and USB may be used as the wired network. A network using a parallel-bus-type interface may be used as the wired network. A network using an interface that is compatible to Ethernet (a registered trademark) such as at least one of 10-BASE-T, 100BASE-TX or 1000BASE-T may be used as the wired network. A network using an electrical wave may be used as the wireless network. A network that is compatible to IEEE802.1x (for example, at least one of a wireless LAN and Bluetooth (registered trademark)) is one example of the network using the electrical wave. A network using an infrared ray may be used as the wireless network. A network using an optical communication may be used as the wireless network. In this case, the control apparatus 3 and the processing system SYS may be configured to transmit and receive various information through the network. Moreover, the control apparatus 3 may be configured to transmit information such as a command and a control parameter to the processing system SYS through the network. The processing system SYS may include a receiving apparatus that receives the information such as the command and the control parameter from the control apparatus 3 through the network. Alternatively, a first control apparatus that performs a part of the processing performed by the control apparatus 3 may be disposed in the processing system SYS and a second control apparatus that performs another part of the processing performed by the control apparatus 3 may be disposed at the outside of the processing system SYS.

An arithmetic model that is buildable by machine learning may be implemented in the control apparatus 3 by the arithmetic apparatus executing the computer program. One example of the arithmetic model that is buildable by the machine learning is an arithmetic model including a neural network (so-called Artificial Intelligence (AI)), for example. In this case, the learning of the arithmetic model may include learning of parameters of the neural network (for example, at least one of weights and biases). The control apparatus 3 may control the operation of the processing system SYS by using the arithmetic model. Namely, the operation for controlling the operation of the processing system SYS may include an operation for controlling the operation of the processing system SYS by using the arithmetic model. Note that the arithmetic model that has been built by off-line machine learning using training data may be implemented in the control apparatus 3. Moreover, the arithmetic model implemented in the control apparatus 3 may be updated by online machine learning on the control apparatus 3. Alternatively, the control apparatus 3 may control the operation of the processing system SYS by using the arithmetic model implemented in an apparatus external to the control apparatus 3 (namely, an apparatus external to the processing system SYS), in addition to or instead of the arithmetic model implemented on the control apparatus 3.

Note that the recording medium recording therein the computer program that should be executed by the arithmetic apparatus may include an optical disc such as a CD-ROM, a CD-R, a CD-RW, a flexible disc, a MO, a DVD-ROM, a DVD-RAM, a DVD-R, a DVD+R, a DVD-RW, a DVD+RW and a Blu-ray (registered trademark), a magnetic disc such as a magnetic tape, an optical-magnetic disc, a semiconductor memory such as a USB memory, and another medium that is configured to store the program. The recording medium may include a device that is configured to record the computer program (for example, a device for a universal use or a device for an exclusive use in which the computer program is embedded to be executable in a form of at least one of a software, a firmware and the like). Moreover, each process or function included in the computer program may be realized by a logical process block that is realized in the control apparatus 3 by means of the control apparatus 3 (namely, a computer) executing the computer program, may be realized by a hardware such as a predetermined gate array (a FPGA, an ASIC) of the control apparatus 3, or may be realized in a form in which the logical process block and a partial hardware module that realizes an partial element of the hardware are combined.

### (2) Riblet Structure RB formed by Processing System SYS

Next, with reference to FIG. 6A to FIG. 6B, the riblet structure RB formed on the workpiece W by the processing system SYS will be described. FIG. 6A is a perspective view that illustrates the riblet structure RB, FIG. 6B is a cross-sectional view that illustrates the riblet structure RB (a VI-VI' cross-sectional view in FIG. 6A), and FIG. 6C is a top view that illustrates the riblet structure RB. Incidentally, in the below-described description, the riblet structure RB formed on the turbine blade BL that is one specific example of the workpiece W will be described. However, the riblet structure RB formed on the workpiece W that is different from the turbine blade BL may has the structure described below.

As illustrated in FIG. 6A to FIG. 6C, the riblet structure RB may include a structure in which a plurality of convex structures 81, each of which extends along a first direction that is along the surface of the turbine blade BL, are arranged along a second direction that is along the surface of the turbine blade BL and that intersects with the first direction. Namely, the riblet structure RB may include a structure in which the plurality of convex structures 81, each of which is formed to extend along the first direction, are arranged along the second direction. In an example illustrated in FIG. 6A to FIG. 6C, the riblet structure RB includes a structure in which the plurality of convex structures 81, each of which extends along the X-axis direction, are arranged along the Y-axis direction.

The convex structure 81 is a structure that protrudes along a direction that intersects with both of a direction along which the convex structure 81 extends and a direction along which the convex structures 81 are arranged. Note that the direction along which the convex structure 81 extends may typically mean a longitudinal direction of the convex structure 81. The convex structure 81 is a structure that protrudes from the surface of the turbine blade BL. In the example illustrated in FIG. 6A to FIG. 6C, the convex structure 81 is a structure that protrudes along the Z-axis direction. Note that the convex structure 81 may include a protrusion-shaped structure that projects against the surface of the turbine blade BL. The convex structure 8 may include a convex-shaped structure that is convex with respect to the surface of the turbine blade BL. The convex structure 8 may include a mountain-shaped structure that is a peak relative to the surface of the turbine blade BL.

A groove structure 82, which is depressed relative to the surrounding thereof, is formed between adjacent convex structures 81. Thus, the riblet structure RB may include a structure in which a plurality of groove structures 82, each of which extends along the first direction that is along the surface of the turbine blade BL, are arranged along the second direction that is along the surface of the turbine blade BL and that intersects with the first direction. Namely, the riblet structure RB may include a structure in which the plurality of groove structures 82, each of which is formed to extend along the first direction, are arranged along the second direction. In the example illustrated in FIG. 6A to FIG. 6C, the riblet structure RB includes a structure in which the plurality of groove structures 82, each of which extends along the X-axis direction, are arranged along the Y-axis direction. Note that the groove structure 82 may be referred to as a groove-shaped structure.

Incidentally, the convex structure 81 may be regarded as a structure that protrudes from the groove structure 82. The convex structure 81 may be regarded as a structure that forms at least one of a protrusion-shaped structure, a convex-shaped structure, and a mountain-shaped structure between two adjacent groove structures 82. The groove structure 82 may be regarded as a structure depressed from the convex structure 81. The groove structure 82 may be regarded as a structure that forms a groove-shaped structure between two adjacent convex structures 81.

The plurality of convex structures 81 may be formed so that the plurality of convex structures 81 are regularly arranged. For example, the plurality of convex structures 81 may be formed so that the plurality of convex structures 81 are arranged at an equal pitch. For example, the plurality of convex structures 81 may be formed so that a plurality of structure groups each of which includes at least two convex structures 81 are arranged at an equal pitch. The plurality of convex structures 81 may be formed so that at least two convex structures 81 are regularly arranged based on a first rule in a first part of the surface of the turbine blade BL and at least two convex structures 81 are regularly arranged based on the same first rule in a second part of the surface of the turbine blade BL. The plurality of convex structures 81 may be formed so that at least two convex structures 81 are regularly arranged based on a first rule in a first part of the surface of the turbine blade BL and at least two convex structures 81 are regularly arranged based on a second rule that is different from the first rule in a second part of the surface of the turbine blade BL. Incidentally, since the convex structures 81 and the groove structures 82 are formed alternately, a state in which the plurality of convex structures 81 are regularly arranged may be regarded to be equivalent to a state in which the plurality of groove structures 82 are regularly arranged.

A direction along which the convex structure 81 extends may be a direction that is along a streamline of the surface of the turbine blade BL. Namely, the convex structure 81 may extend along the streamline of the surface of the turbine blade BL. The streamline of the turbine blade BL may mean curved line whose tangent line corresponds to a velocity vector in a flow field on the surface of the turbine blade BL. In this case, the convex structure 81 that extends curvilinearly along the streamline may be formed on the surface of the turbine blade BL. Alternatively, the surface of the turbine blade BL may be divided into a plurality of surface areas, and the convex structure 81 that linearly extends along a direction along which a straight line obtained by averaging the streamlines in each surface area extends may be formed in each surface area, and the convex structures 81 that linearly extend in the surface areas, respectively, may be at least partially connected over the plurality of surface areas. The processing system SYS may form the riblet structure RB by forming the convex structures 81 that curvilinearly extend, or may form the riblet structure RB by forming the convex structures 81 that linearly extend. Note that the same may be applied to the groove structure 82 formed between the two convex structures 81.

The convex structure 81 includes a pair of side surfaces 811 and 812 facing opposite directions, for example. Note that "a state in which one surface and the other surface faces opposite directions" in the present example embodiment may mean a state in which one surface faces toward one side of an axis intersecting with the one surface and the other surface and the other surface faces toward the other side along the same axis (namely, the opposite side relative to the one side). In an example illustrated in FIG. 6A to FIG. 6C, the convex structure 81 includes the side surface 811 facing toward the -Y side and the side surface 812 facing toward the +Y side. Each of the pair of side surfaces 811 and 812 is planar surface. However, at least one of the pair of side surfaces 811 and 812 may include a curved surface.

The pair of side surfaces 811 and 812 may be non-parallel to each other. In this case, the pair of side surfaces 811 and 812 of the convex structure 81 may be connected through one edge parts thereof (in the example illustrated in FIG. 6A to FIG. 6C, upper edge parts at the +Z side). A part at which the pair of side surfaces 811 and 812 of the convex structure 81 are connected constitutes a corner part 813 of the convex structure 81. The corner part 813 of the convex structure 81 may be a vertex of the convex structure 81. The corner part 813 of the convex structure 81 may be a boundary between the pair of side surfaces 811 and 812 of the convex structure 81. In this case, the pair of side surfaces 811 and 812 may be regarded to be connected through the corner part 813 of the convex structure 81. In the example illustrated in FIG. 6A to FIG. 6C, the pair of side surfaces 811 and 812 are connected so that the upper edge part of the side surface 811 and the upper edge part of the side surface 812 are in contact. In this case, a shape of a cross section of the convex structure 81 including the Z-axis may be triangular shape. In this case, the shape of the cross section of the convex structure 81 including the Z-axis may be a symmetrical triangular shape or may be an asymmetrical triangular shape. However, the shape of the cross section of the convex structure 81 including the Z-axis may be any shape different from the triangular shape. Note that the corner part 813 may include a curved surface as described later in detail.

Note that a state in which the pair of side surfaces 811 and 812 are non-parallel to each other may include a state in which a virtual plane (typically, a planar plane) including the side surface 811 and a virtual plane (typically, a planar plane) including the side surface 812 intersect with each other. In this case, the virtual plane including the side surface 811 and the virtual plane including the side surface 812 may be an approximate plane of the side surface 811 and an approximate plane of the side surface 812, respectively.

In a case where the pair of side surfaces 811 and 812 are non-parallel to each other, the side surface 811 may be regarded to be inclined with respect to the side surface 812 and the side surface 812 may be regarded to be inclined with respect to the side surface 811. Typically, in a case where the pair of side surfaces 811 and 812 are non-parallel to each other, each of the pair of side surfaces 811 and 812 may be inclined with respect to a direction toward which the convex structure 81 protrudes (in the example illustrated in FIG. 6A to FIG. 6C, the Z-axis direction). In this case, each of the side surfaces 811 and 821 may be referred to as an inclined part. However, the pair of side surfaces 811 and 812 may be parallel to each other.

The side surface 811 of one convex structure 81 and the side surface 812 of another convex structure 81, which is adjacent to the one convex structure 81 along a direction along which the convex structures 81 are arranged, may be connected through a boundary part 814 that connects other edge parts thereof (in the example illustrated in FIG. 6A to FIG. 6C, a lower edge part at the -Z side). Namely, the side surfaces 811 and 812 that are of the two adjacent convex structures 81, respectively, and that face each other may be connected through the boundary part 814 that constitutes a boundary between the two adjacent convex structures 81. In the example illustrated in FIG. 6A to FIG. 6C, the boundary part 814 includes a surface that intersects with each of the side surfaces 811 and 812 that are connected by the boundary part 814. In this case, the groove structure 82 may be regarded to be formed by the boundary part 814 and the side surfaces 811 and 812 that are connected by the boundary part 814.

The boundary part 814 may be planar surface. In this case, a shape of a cross section of the groove structure 82 including the Z-axis is a trapezoidal shape. However, the shape of the cross section of the groove structure 82 including the Z-axis may be any shape different from the trapezoidal shape. Note that the boundary part 814 may include a curved surface as described later in detail.

However, the side surface 811 of one convex structure 81 may be connected to the side surface 812 of another convex structure 81 without the boundary part 814 including a surface. For example, the side surface 811 of one convex structure 81 and the side surface 812 of another convex structure 81 may be connected so that the other edge parts thereof (in the example illustrated in FIG. 6A to FIG. 6C, the lower edge parts at the -Z side) are in contact. In this case, a part at which the other edge part of the side surface 811 of one convex structure 81 is connected to the other edge part of the side surface 812 of another convex structure 81 may be referred to as the boundary part 814.

A height H_rb of at least one of the plurality of convex structures 81 may be set to be a height determined based on a pitch P_rb of the convex structures 81. For example, the height H_rb of at least one of the plurality of convex structures 81 may be equal to or smaller than the pitch P_rb of the convex structures 81. For example, the height H_rb of at least one of the plurality of convex structures 81 may be equal to or smaller than a half of the pitch P_rb of the convex structures 81. As one example, the pitch P_rb of the convex structures 81 may be larger than 5 micrometers and smaller than 200 micrometers. Namely, the pitch P_rb of the convex structures 81 may satisfy a first pitch condition "5 micrometers < P_rb < 200 micrometers". In this case, the height H_rb of at least one of the plurality of convex structures 81 may be larger than 5 micrometers and smaller than 100 micrometers. The height H_rb of at least one of the plurality of convex structures 81 may satisfy a first height condition "2.5 micrometers < H_rb < 100 micrometers". Namely, the riblet structure RB may satisfy at least one of the first pitch condition and the first height condition. However, due to a constraint on a processing accuracy of the riblet structure RB, instead of 2.5 micrometers, 2.0 micrometers may be used as a lower limit of the height H_rb of at least one of the plurality of convex structures 81 (for example, a lower limit of the height H_rb in a situation where the pitch P_rb is 5 micrometers that is a lower limit value).

The riblet structure RB that satisfies the first pitch condition can reduce the resistance of the surface of the turbine blade BL to fluid more appropriately, compared to the riblet structure RB that does not satisfy the first pitch condition. However, even the riblet structure RB that does not satisfy the first pitch condition can still reduce the resistance of the surface of the turbine blade BL to the fluid, compared to a case where the riblet structure RB is not formed. Similarly, the riblet structure RB that satisfies the first height condition can reduce the resistance of the surface of turbine blade BL to fluid more appropriately, compared to the riblet structure RB that does not satisfy the first height condition. However, even the riblet structure RB that does not satisfy the first height condition can reduce the resistance of the surface of the turbine blade BL to fluid, compared to the case where the riblet structure RB is not formed.

Note that the height H_rb of the convex structure 81 in the present example embodiment may mean a size of the convex structure 81 along the direction (along the Z-axis direction in the example illustrated in FIG. 6A to FIG. 6C) along which the convex structure 81 protrudes. The height H_rb of the convex structure 81 may mean a distance from a lower edge part of the convex structure 81 to an upper edge part of the convex structure 81 along the direction along which the convex structure 81 protrudes. The height H_rb of convex structure 81 may mean a distance from the boundary part 814 connected to the lower edge part of the convex structure 81 to the corner part 813 corresponding to the vertex of the convex structure 81 along the direction along which the convex structure 81 protrudes. Note that the height of convex structure 81 may be regarded to be substantially equivalent to a depth of the groove structure 82. Moreover, the pitch P_rb of the convex structures 81 in the present example embodiment may mean a distance between corresponding same parts (for example, vertices) of two convex structures 81 adjacent to each other along a direction that intersects with the direction along which the convex structures 81 extend. In the example illustrated in FIG. 6A to FIG. 6C, the pitch p_rb of the convex structures 81 may mean a distance between the vertices of two convex structures 81 adjacent to each other along the Y-axis direction. Incidentally, since the convex structures 81 and the groove structures 82 are formed alternately along the direction that intersects with the direction along which the convex structures 81 extend, the pitch p_rb of the convex structures 81 may be regarded to be equivalent to the pitch of the groove structures 82. The pitch of the groove structures 82 may mean a distance between corresponding same parts of two groove structures 82 adjacent to each other along a direction that intersects with the direction along which the groove structures 82 extend. In the example illustrated in FIG. 6A to FIG. 6C, the pitch of the groove structures 82 may mean a distance between the corresponding same parts of two the groove structures 82 adjacent to each other along the Y-axis direction.

As described above, the processing system SYS in the present example embodiment forms the riblet structure RB by performing the removal processing. Thus, the processing system SYS forms the riblet structure RB by performing the removal processing on a surface part of the surface of the turbine blade BL on which the riblet structure RB is formed (in the below-described description, it is referred to as a "riblet structure surface BLs"). Specifically, the processing system SYS may form the riblet structure RB by performing the removal processing for removing a part of the turbine blade BL on which the groove structure 82 is formed. Namely, the processing system SYS may form the riblet structure RB by performing the removal processing for removing a part of the turbine blade BL so that a part of the turbine blade BL on which the convex structure 81 is formed remains. For example, the processing system SYS may irradiate the turbine blade BL with the processing light EL so that a part of the riblet structure surface BLs of the turbine blade BL on which the groove structure 82 is formed is irradiated with the processing light EL. Specifically, the processing system SYS may form the riblet structure RB by repeating: a scan operation for irradiating the riblet structure surface BLs of the turbine blade BL with the processing light EL while moving the target irradiation area EA (see FIG. 1) with which the processing light EL is irradiated along the X-axis direction along which the groove structure 82 extends; and a step operation for moving the target irradiation area EA of the processing light EL along the Y-axis direction along which the groove structures 82 are arranged without irradiating the riblet structure surface BLs of the turbine blade BL with the processing light EL. In this case, it can be said that the processing system SYS forms the riblet structure RB (in other words, forms the convex structures 81) by forming the groove structures 82.

As a result, the riblet structure surface BLs on which the riblet structure RB is formed may function as a surface by which the resistance of the turbine blade BL to the fluid is reducible.

### (3) Other Method of Forming Riblet Structure RB

In the above-described description, the processing system SYS forms the riblet structure RB on the turbine blade BL. Namely, the turbine blade BL on which the riblet structure RB is formed is manufactured by the processing system SYS. In other words, the turbine blade BL on which the riblet structure RB is formed is manufactured by the processing system SYS processing the turbine blade BL. However, the turbine blade BL on which the riblet structure RB is formed may be manufactured by a method different from a method by which the processing system SYS processes the turbine blade BL. Namely, the riblet structure RB may be formed by a method different from the method by which the processing system SYS processes the turbine blade BL.

As one example, the turbine blade BL on which the riblet structure RB is formed may be manufactured by using a mold (for example, at least one of a metallic mold and a casting mold) ML. Namely, the turbine blade BL on which the riblet structure RB is formed may be manufactured by using a molding method by which a molten material is poured into the mold ML and then the molten material is cooled and solidified. In this case, the turbine blade BL on which the riblet structure RB is formed may be regarded to be a molded product that is molded by using the mold ML. The turbine blade BL on which the riblet structure RB is formed may be regarded to be an injection molded product that is molded by an injection molding using the mold ML. The mold ML may serve as a mold for molding (for example, for molding by the injection molding) the turbine blade BL on which the riblet structure RB is formed by a meltable material.

The mold ML may be a mold made of any material as long as the turbine blade BL can be manufactured by using the mold ML. As one example, at least one of a mold made of zirconia (zirconia ceramics), a mold made of pre-hardened steel, a mold made of as-rolled steel, and a mold made of stainless steel may be used as the mold ML. A mold made of any metal may be used as the mold ML. A mold made of any material different from the metal may be used as the mold ML.

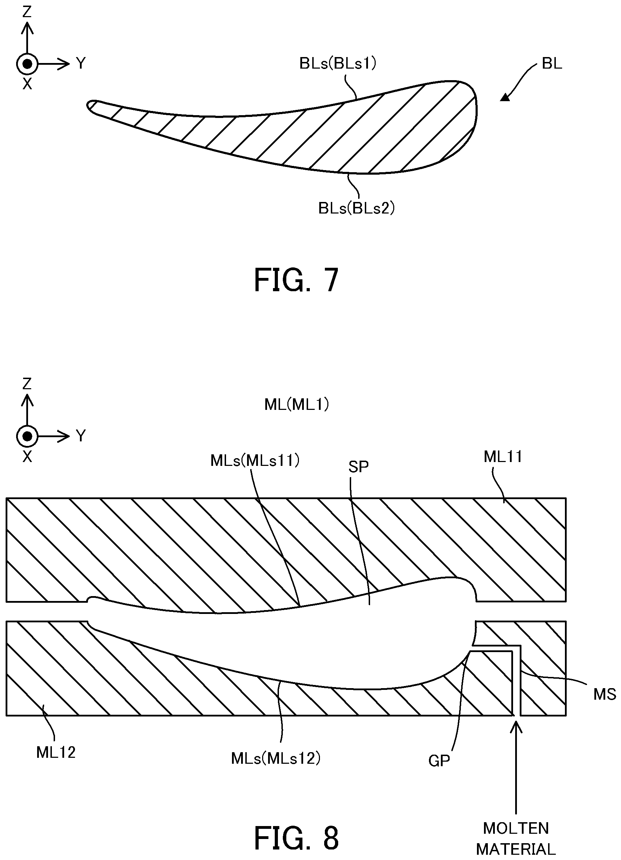

Next, a specific example of the mold ML used to manufacture the turbine blade BL on which the riblet structure RB is formed will be described. In the below-described description, for convenience of description, the mold ML for manufacturing the turbine blade BL that includes: a riblet structure surface BLs constituting a pressure surface 921 (see FIG. 4); and a riblet structure surface BLs constituting a suction surface 922 (see FIG. 4) will be described, as illustrated in FIG. 7. Note that FIG. 7 corresponds to a IV-IV' cross-section of FIG. 4. In the below-described description, the riblet structure surface BLs constituting the pressure surface 921 is referred to as a riblet structure surface BLs1, and the riblet structure surface BLs constituting the suction surface 922 is referred to as a riblet structure surface BLs2. However, the turbine blade BL (alternatively, any workpiece W described above) different from the turbine blade BL including the riblet structure surfaces BLs1 and BLs2 may be manufactured by the mold ML having the same features as the below-described mold ML.

### (3-1) First specific example of mold ML used for manufacturing turbine blade BL on which riblet Structure RB is formed

Firstly, with reference to FIG. 8, a first specific example of the mold ML used to manufacture the turbine blade BL on which the riblet structure RB is formed will be described. In the below-described description, the first specific example of the mold ML is referred to as a "mold ML1". FIG. 8 illustrates a cross-sectional view that illustrates a structure of the mold ML1.

As illustrated in FIG. 8, the mold ML1 includes: a mold ML11 that may be referred to as a core or a male mold; and a mold ML12 that may be referred to as a cavity or a female mold. Namely, in an example illustrated in FIG. 8, the mold ML1 is a two-plate type mold. However, the mold ML1 may be a three-plate type or a multi-plate type including four or more molds. The mold ML1 may be an assembled mold (namely, a mold that is divided into a plurality of mold parts and a mold in which the plurality of mold parts are assembled). Alternatively, the mold ML1 may be a roll-type mold as described in US2016/325818A1. Alternatively, the mold ML1 may be a stamp-type mold.

Each of the molds ML11 and ML12 includes a mold surface MLs. In the below-described description, the mold surface MLs of the mold ML11 is referred to as a mold surface MLs11 and the mold surface MLs of the mold ML12 is referred to as a mold surface MLs12, if necessary. However, in a case where there is no need to distinguish the mold surface MLs11 and the mold surface MLs12, they are collectively referred to as the mold surface MLs.

The mold surface MI,s is a surface that contacts the material poured into the mold ML1 to manufacture the turbine blade BL. Thus a space surrounded by the mold surfaces MLs is a molding space SP to which the material poured into the mold ML1 to manufacture the turbine blade BL is supplied. The material poured into the mold ML1 is typically a material having a fluidity. As one example, the material poured into the mold ML1 may be a molten material (for example, a molten metal), or may be a softened material. The molding space SP has a shape corresponding to a shape of the turbine blade BL. Thus, in the example illustrated in FIG. 8, the mold ML1 may be regarded to be a mold-type mold.

Specifically, after the molds ML11 and ML12 are assembled so that the molding space SP is formed (namely, after the molds ML11 and ML12 are brought into close contact with each other), the molten material is supplied to the molding space SP through a material supply path MS (for example, at least one of a sprue, a gate, and a runner) that penetrates the mold ML. Then the molten material is cooled. As a result, the molten material is solidified. As a result, the fluidity of the material becomes lower. Then, the molds MI,11 and ML12 are separated, and the solidified material is removed from the molding space SP as the turbine blade BL.

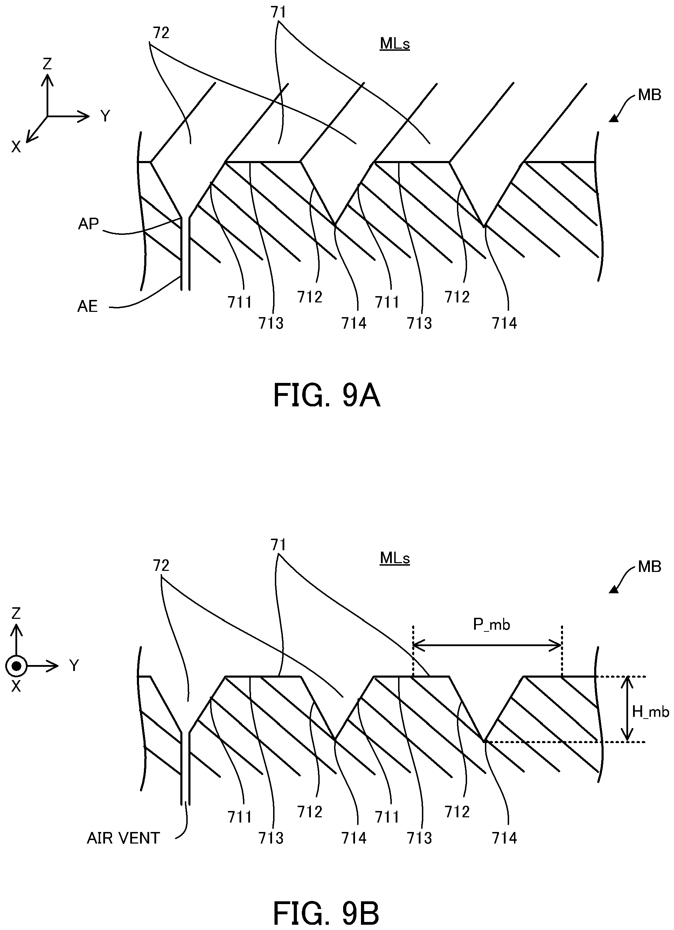

A mold structure MB for forming (namely, molding) the riblet structure RB may be formed on the mold surface MLs. Specifically, the mold structure MB may be formed on a surface part of the mold surface MI,s that corresponds to the riblet structure surface BLs. Namely, the mold structure MB may be formed on a surface part of the mold surface MI,s that is used to mold the riblet structure surface BLs. In the example illustrated in FIG. 8, the mold surface MLs11 corresponds to the riblet structure surface BLs1 that constitutes the pressure surface 921, and the mold surface MLs12 corresponds to the riblet structure surface BLs2 that constitutes the suction surface 922. Next, with reference to FIG. 9A and FIG. 9B, the mold structure MB will be further described. FIG. 9A is a perspective view that illustrates the mold structure MB, and FIG. 9B is a cross-sectional view that illustrates the mold structure MB.

As illustrated in FIG. 9A and FIG. 9B, the mold structure MB is a structure that is complementary to the mold structure MB. Specifically, the mold structure MB may include a structure in which a plurality of convex structures 71, each of which extends along a fourth direction that is along the surface of the mold surface MLs, are arranged along a fifth direction that is along the surface of the mold surface MLs and that intersects with the fourth direction. Namely, the mold structure MB may include a structure in which the plurality of convex structures 71, each of which is formed to extend along the fourth direction, are arranged along the fifth direction (namely, arranged along the mold surface MLs). In an example illustrated in FIG. 9A to FIG. 9C, the mold structure MB includes a structure in which the plurality of convex structures 71, each of which extends along the X-axis direction, are arranged along the Y-axis direction.

The convex structure 71 is a structure that protrudes along a direction that intersects with both of a direction along which the convex structure 71 extends and a direction along which the convex structures 71 are arranged. The convex structure 71 is a structure that protrudes from the surface of the mold ML11 or ML12. In the example illustrated in FIG. 9A to FIG. 9C, the convex structure 71 is a structure that protrudes along the Z-axis direction. Note that the convex structure 71 may include a protrusion-shaped structure that projects against the surface of the mold ML11 or ML12. The convex structure 8 may include a convex-shaped structure that is convex with respect to the surface of the mold ML11 or ML12. The convex structure 8 may include a mountain-shaped structure that is a peak relative to the surface of the mold ML11 or ML12.

A groove structure 72, which is depressed relative to the surrounding thereof, is formed between adjacent convex structures 71. Thus, the mold structure MB may include a structure in which a plurality of groove structures 72, each of which extends along the fourth direction that is along the mold surface MLs, are arranged along the fifth direction that is along the mold surface MLs and that intersects with the fourth direction. Namely, the mold structure MB may include a structure in which the plurality of groove structures 72, each of which is formed to extend along the fourth direction, are arranged along the fifth direction. In the example illustrated in FIG. 9A to FIG. 9C, the mold structure MB includes a structure in which the plurality of groove structures 72, each of which extends along the X-axis direction, are arranged along the Y-axis direction. Note that the groove structure 72 may be referred to as a groove-shaped structure.

Incidentally, the convex structure 71 may be regarded as a structure that protrudes from the groove structure 72. The convex structure 71 may be regarded as a structure that forms at least one of a protrusion-shaped structure, a convex-shaped structure, and a mountain-shaped structure between two adjacent groove structures 72. The groove structure 72 may be regarded as a structure depressed from the convex structure 71. The groove structure 72 may be regarded as a structure that forms a groove-shaped structure between two adjacent convex structures 71.

The plurality of convex structures 71 may be formed so that the plurality of convex structures 71 are regularly arranged. For example, the plurality of convex structures 71 may be formed so that the plurality of convex structures 71 are arranged at an equal pitch. For example, the plurality of convex structures 71 may be formed so that a plurality of structure groups each of which includes at least two convex structures 71 are arranged at an equal pitch. The plurality of convex structures 71 may be formed so that at least two convex structures 71 are regularly arranged based on a third rule in a first part of the mold surface MLs and at least two convex structures 71 are regularly arranged based on the same third rule in a second part of the mold surface MLs. The plurality of convex structures 71 may be formed so that at least two convex structures 71 are regularly arranged based on a third rule in a first part of the mold surface MLs and at least two convex structures 71 are regularly arranged based on a fourth rule that is different from the third rule in a second part of the mold surface MLs. Incidentally, since the convex structures 71 and the groove structures 72 are formed alternately, a state in which the plurality of convex structures 71 are regularly arranged may be regarded to be equivalent to a state in which the plurality of groove structures 72 are regularly arranged.

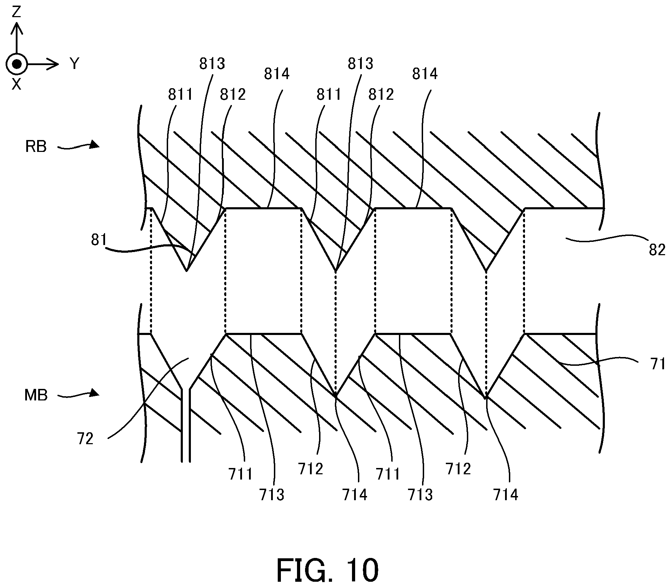

The material entering the groove structures 72 forms the convex structures 81 of the riblet structure RB. Namely, the materials entering the plurality of groove structures 72 forms the plurality of convex structures 81 of the riblet structure RB, respectively. Thus, the groove structure 72 of the mold structure MB is a structure for forming the convex structure 81 of the riblet structure RB. Thus, as illustrated in FIG. 10 that is a cross-sectional view illustrating the relationship between the riblet structure RB and the mold structure MB, a shape (for example, a cross-sectional shape) of the groove structure 72 is complementary to a shape (for example, a cross-sectional shape) of the convex structure 81. On the other hand, the convex structure 71 of the mold structure MB is used to form the groove structure 82 of the riblet structure RB. Thus, as illustrated in FIG. 10, a shape (for example, a cross-sectional shape) of the convex structure 71 is complementary to a shape (for example, a cross-sectional shape) of the groove structure 82. In this manner, the riblet structure surface BLs of the turbine blade BL is molded by the mold structure MB. Namely, the riblet structure surface BLs of the turbine blade BL is molded by the convex structure 71 and the groove structure 72 of the mold structure MB. Next, with reference to FIG. 9A and FIG. 9B again, the convex structure 71 that is complementary to the groove structure 82 and the groove structure 72 that is complementary to the convex structure 81 will be further described below.

The convex structure 71 includes a pair of side surfaces 711 and 712 facing opposite directions, for example. In an example illustrated in FIG. 9A to FIG. 9B, the convex structure 71 includes the side surface 711 facing toward the -Y side and the side surface 712 facing toward the +Y side. Each of the pair of side faces 711 and 712 is planar surface. However, at least one of the pair of side surfaces 711 and 712 may include a curved surface.

The pair of side surfaces 711 and 712 may be non-parallel to each other. In this case, the pair of side surfaces 711 and 712 of the convex structure 71 may be connected through one edge parts thereof (in the example illustrated in FIG. 9A to FIG. 9B, upper edge parts at the +Z side). A part at which the pair of side surfaces 711 and 712 of the convex structure 71 are connected constitutes a corner part 713 of the convex structure 71. The corner part 713 of the convex structure 71 may be a boundary between the pair of side surfaces 711 and 712 of the convex structure 71. In this case, the pair of side surfaces 711 and 712 may be regarded to be connected through the corner part 713 of the convex structure 71. The corner part 713 is a structure for molding the boundary part 814 of the riblet structure RB (namely, the boundary part 814 that is a planar surface for connecting two adjacent convex structures 81). Thus, in the example illustrated in FIG. 9A to FIG. 9B, the corner part 713 includes a planar surface. In this case, a shape of a cross section of the convex structure 71 including the Z-axis may be trapezoidal shape. However, the shape of the cross section of the convex structure 71 including the Z-axis may be any shape different from the trapezoidal shape. Note that the corner part 713 may include a curved surface as described later in detail.

Note that a state in which the pair of side surfaces 711 and 712 are non-parallel to each other may include a state in which a virtual plane (typically, a planar plane) including the side surface 711 and a virtual plane (typically, a planar plane) including the side surface 712 intersect with each other. In this case, the virtual plane including the side surface 711 and the virtual plane including the side surface 712 may be an approximate plane of the side surface 711 and an approximate plane of the side surface 712, respectively.

In a case where the pair of side surfaces 711 and 712 are non-parallel to each other, the side surface 711 may be regarded to be inclined with respect to the side surface 712 and the side surface 712 may be regarded to be inclined with respect to the side surface 711. Typically, in a case where the pair of side surfaces 711 and 712 are non-parallel to each other, each of the pair of side surfaces 711 and 712 may be inclined with respect to a direction toward which the convex structure 71 protrudes (in the example illustrated in FIG. 9A to FIG. 9B, the Z-axis direction). In this case, each of the side surfaces 711 and 821 may be referred to as an inclined part. However, the pair of side surfaces 711 and 712 may be parallel to each other.

The side surface 711 of one convex structure 71 and the side surface 712 of another convex structure 71, which is adjacent to the one convex structure 71 along a direction along which the convex structures 71 are arranged, may be connected through other edge parts thereof (in the example illustrated in FIG. 9A to FIG. 9B, lower edge parts at the -Z side). Namely, the side surfaces 711 and 712 that are of the two adjacent convex structures 81, respectively, and that face each other may be connected through a boundary part 714 that constitutes a boundary between the two adjacent convex structures 71. The boundary part 714 is a structure for molding the corner part 813 of the riblet structure RB (namely, the vertex of the convex structure 81). Thus, in the example illustrated in FIG. 9A to FIG. 9B, the side surfaces 711 and 712 that are of the two adjacent convex structures 81, respectively, are directly connected, and the boundary part 714 is a part at which the side surfaces 711 and 712 that are of the two adjacent convex structures 81, respectively, are directly connected. In this case, a shape of a cross section including the Z-axis of the groove structure 72 is a triangular shape. However, the shape of the cross section including the Z-axis of the groove structure 72 may be any shape different from the triangular shape.

However, the side surface 711 of one convex structure 71 and the side surface 712 of another convex structure 71 may be connected through the boundary part 714 that includes a surface. For example, the boundary part 714 may include a planar surface. In this case, the shape of the cross section of the groove structure 72 including the Z-axis may be a trapezoidal shape. Alternatively, the boundary part 714 may include a curved surface, as described later in detail. In a case where the side surfaces 711 and 712 that are of the two adjacent convex structures 71, respectively, are connected through the boundary part 714 part that includes the surface, the convex structure 81 that includes the pair of side surfaces 811 and 812 connected through the corner part 813 includes a surface may be formed by the boundary part 714 including such surface.

Since the convex structure 71 is a structure for forming the above-described groove structure 82, a height H_mb of at least one of the plurality of convex structures 71 may be the equal to the depth of at least one of the plurality of groove structures 82 (namely, the height H_rb of at least one of the plurality of convex structures 81). A pitch P_mb of the convex structures 71 may be equal to the pitch of the groove structures 82 (namely, the pitch P_rb of the convex structures 71). Thus, even in the mold structure MB, as in the riblet structure RB, the height H_mb of at least one of the plurality of convex structures 71 may be set to a height determined based on the pitch P_mb of the convex structures 71. For example, the height H_mb of at least one of the plurality of convex structures 71 may be equal to or smaller than the pitch P_mb of the convex structures 71. For example, the height H_mb of at least one of the plurality of convex structures 71 may be equal to or smaller than a half of the pitch P_mb of the convex structures 71. As one example, the pitch P_mb of the convex structures 71 may be larger than 5 micrometers and smaller than 200 micrometers. Namely, the pitch P_mb of the convex structures 71 may satisfy a second pitch condition "5 micrometers < P_mb < 200 micrometers". In this case, the height H_mb of at least one of the plurality of convex structures 71 may be larger than 2.5 micrometers and smaller than 100 micrometers. The height H_mb of at least one of the plurality of convex structures 71 may satisfy a second height condition "2.5 micrometers < H_mb < 100 micrometers". Namely, the mold structure MB may satisfy at least one of the second pitch condition and the second height condition.

Here, in a case where the pitch P_mb of the convex structure 71 satisfies the second pitch condition "10 micrometers < P_mb < 200 micrometers", the pitch of the groove structure 82 formed by the mold structure MB ranges from 10 micrometers to 200 micrometers. Here, in the riblet structure RB, the pitch P_rb of the convex structure 81 and the pitch of the groove structure 82 are substantially equal. Thus, in a case where the convex structure 71 satisfies the second pitch condition, the pitch P_rb of the convex structure 81 in the riblet structure RB ranges from 10 micrometers to 200 micrometers. Namely, the pitch P_rb of the convex structure 81 satisfies the above-described first pitch condition "5 micrometers < P_rb < 200 micrometers". As a result, as described above, the riblet structure RB can reduce the resistance of the surface of the turbine blade BL to the fluid more appropriately.

Moreover, in a case where the height H_mb of at least one of the plurality of convex structures 71 satisfies the second height condition "5 micrometers < H_mb < 100 micrometers", the depth of the groove structure 82 formed by the mold structure MB ranges from 5 micrometers to 100 micrometers. Here, since the depth of the groove structure 82 and the height H_rb of the convex structure 81 are substantially equal in the riblet structure RB, the height H_rb of the convex structure 81 in the riblet structure RB ranges from 5 micrometers to 100 micrometers, in a case where the convex structure 71 satisfies the second height condition. Namely, the height H_rb of the convex structure 81 satisfies the above-described first height condition "5 micrometers < H_rb < 100 micrometers". As a result, as described above, the riblet structure RB can reduce the resistance of surface of the turbine blade BL to the fluid more appropriately.

Note that the height H_mb of the convex structure 71 in the present example embodiment may mean a size of the convex structure 71 along the direction (along the Z-axis direction in the example illustrated in FIG. 9A to FIG. 9B) along which the convex structure 71 protrudes. The height H_mb of the convex structure 71 may mean a distance from a lower edge part of the convex structure 71 to an upper edge part of the convex structure 71 along the direction along which the convex structure 71 protrudes. The height H_mb of convex structure 71 may mean a distance from the boundary part 714 connected to the lower edge part of the convex structure 71 to the corner part 713 constituting the upper edge part of the convex structure 71 along the direction along which the convex structure 71 protrudes. Note that the height of convex structure 71 may be regarded to be substantially equivalent to a depth of the groove structure 72. Moreover, the pitch P_mb of the convex structures 71 in the present example embodiment may mean a distance between corresponding same parts of two convex structures 71 adjacent to each other along a direction that intersects with the direction along which the convex structures 71 extend. In the example illustrated in FIG. 9A to FIG. 9B, the pitch P_mb of the convex structures 71 may mean a distance between the vertices of two convex structures 71 adjacent to each other along the Y-axis direction. Incidentally, since the convex structures 71 and the groove structures 72 are formed alternately along the direction that intersects with the direction along which the convex structures 71 extend, the pitch P_mb of the convex structures 71 may be regarded to be equivalent to the pitch of the groove structures 72. The pitch of the groove structures 72 may mean a distance between corresponding same parts of two groove structures 72 adjacent to each other along a direction that intersects with the direction along which the groove structures 72 extend. In the example illustrated in FIG. 9A to FIG. 9B, the pitch of the groove structures 72 may mean a distance between the corresponding same parts of two the groove structures 72 adjacent to each other along the Y-axis direction.

The mold structures MB formed on the mold surface MLs may be formed by the processing system SYS. Namely, the processing system SYS may form the mold structure MB on the mold surface MLs by irradiating the mold surface MI,s with the processing light EL. The processing system SYS may form the mold structure MB on the mold surface MLs by performing a removal processing on the mold surface MLs. Alternatively, the mold structure MB formed on the mold surface MLs may be formed by an apparatus different from the processing system SYS. Note that the molds ML11 and ML12 on which the mold structure MB is not yet formed may be manufactured by a method different from an optical processing. As one example, the molds ML11 and ML12 on which the mold structure MB is not yet formed may be manufactured by a method using at least one of a cutting machining, a casting, and an electrical discharge machining.

When the mold structure MB is formed on the mold surface MLs, a material supply port (so-called gate port) GP (see FIG. 8) for supplying the molten material into the molding space SP may be formed at a position determined based on the mold structure MB. The material supply port GP is typically an opening formed on the mold surface MLs by the material supply path MS. Specifically, the material supply port GP may be formed at a position determined based on the direction along which the convex structure 71 of the mold structure MB extends. The material supply port GP may be formed at a position determined based on the direction along which the groove structure 72 of the mold structure MB extends. As one example, the material supply port GP may be formed at a position at which the material supply port GP is capable of supplying the molten material from the material supply port GP along the direction along which at least one of the convex structure 71 and the groove structure 72 extends. The material supply port GP may be formed at a position that allows a direction along which the material is supplied from the material supply port GP to be same as the direction along which at least one of the convex structure 71 and the groove structure 72 extends. Moreover, the material supply port GP may be formed at a position that allows a direction along which the material flows from the material supply port GP on the mold surface MLs to be same as the direction along which at least one of the convex structure 71 and the groove structure 72 extends. As a result, the material supplied from the material supply port GP can enter the groove structure 72 more easily, and thus, the turbine blade BL on which the riblet structure RB is formed can be properly manufactured.

As illustrated in FIG. 9A and FIG. 9B, in addition to the material supply port GP, a gas outlet AP that is connected to a gas outlet path AE for discharging gas remaining in the molding space SP to the outside of the mold ML may be formed at the mold surface MLs. Namely, the gas outlet AP for an air venting may be formed at the mold surface MLs. In the examples illustrated in FIG. 9A and FIG. 9B, the gas outlet AP is formed at the boundary part 714 that constitutes a bottom part of the groove structure 72. However, the gas outlet AP may be formed at another position. The size of the gas outlet AP for the air venting along a longitudinal direction of the groove structure 72 may be from 2 micrometers to 20 micrometers, for example.

As described above, the molds ML11 and ML12 are separated after the material supplied to the molding space SP has solidified. Namely, the molds MI,11 and ML12 are removed from the solidified material (namely, the turbine blade BL) in order to extract the solidified material as the turbine blade BL. In this case, a direction along which each of the molds ML11 and ML12 is removed from the turbine blade BL (namely, a direction along which each of the molds MI,11 and ML12 is pulled out of the turbine blade BL) may be a direction based on the mold structure MB. For example, the direction along which each of the molds ML11 and ML12 is removed from the turbine blade BL may be a direction along which the plurality of convex structures 71 of the mold structure MB extend. For example, the direction along which each of the molds ML11 and ML12 is removed from the turbine blade BL may be a direction that is obtained by averaging the directions along which the plurality of convex structures 71 of the mold structure MB extend. As a result, each of the molds ML11 and ML12 can be removed from the turbine blade BL more easily. Specifically, each of the molds ML11 and ML12 can be removed from the turbine blade BL so that the material that has entered the groove structure 72 of the mold structure MB (namely, the material forming the turbine blade BL) is less likely to remain in the groove structure 72. Residual of a part of the material in the groove structure 72 leads to a chipping of a part of the turbine blade BL that has been manufactured from the solidified material. Thus, the turbine blade BL is less likely to be chipped partially. Thus, it is possible to manufacture the turbine blade BL with high shape accuracy. Incidentally, in a case where each of the molds ML11 and ML12 cannot be removed from the turbine blade BL along the direction based on the mold structure MB, at least one of the turbine blade BL and the molds ML11 and ML12 may be moved along a direction different from the direction based on the mold structure MB, and then, each of the molds MI,11 and ML12 may be removed from the turbine blade BL along the direction based on the mold structure MB. However, for example, the direction along which each of the molds ML11 and ML12 is removed from the turbine blade BL may be a direction (namely, the a height direction) along which the plurality of convex structures 71 of the mold structure MB protrude.

### (3-2) Second specific example of mold ML used for manufacturing turbine blade BL on which riblet Structure RB is formed

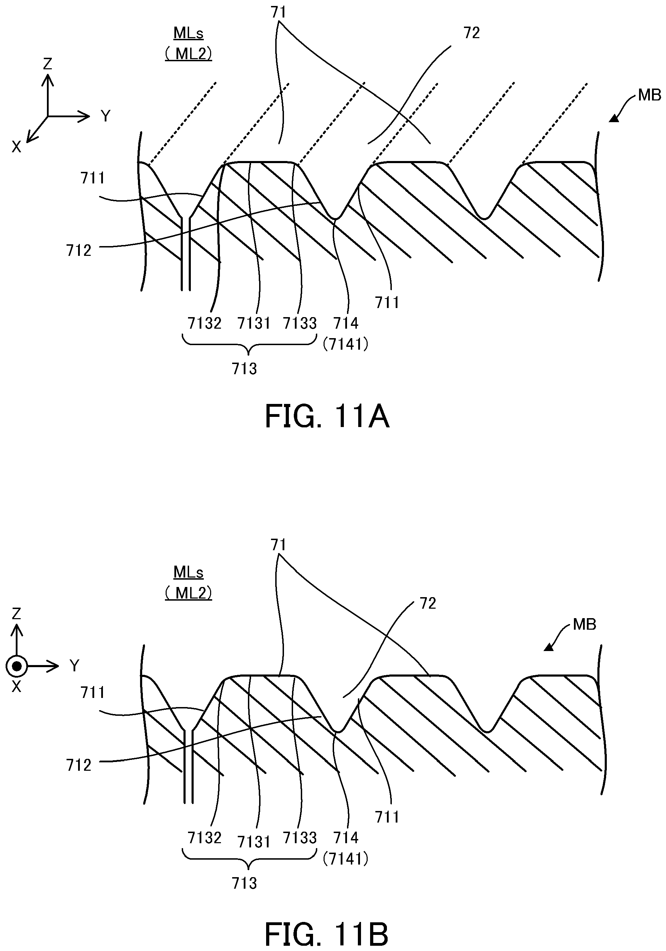

Next, a second specific example of the mold ML used to manufacture the turbine blade BL on which the riblet structure RB is formed will be described. In the below-described description, the second specific example of mold ML is referred to as a "mold ML2". The mold ML2 is different from the above-described mold ML1, in which each of the corner part 713 and the boundary part 714 may not include a curved surface, in that at least one of the corner part 713 and the boundary part 714 includes a curved surface. Namely, the mold ML2 is different from the above-described mold ML1, in which a chamfering process may not be performed on each of the corner part 713 and the boundary part 714, in that the chamfering process (especially an R-chamfering process, and a round processing process) is performed on at least one of the corner part 713 and the boundary part 714. Other feature of the mold ML2 may be same as other feature of the mold ML1. Next, with reference to FIG. 11A to FIG. 11B, the mold structure MB in which at least one of the corner part 713 and the boundary part 714 includes the curved surface will be described. FIG. 11A is a perspective view that illustrates the mold structure MB in which at least one of the corner part 713 and the boundary part 714 includes the curved surface, and FIG. 11B is a cross-sectional view that illustrates the mold structure MB in which at least one of the corner part 713 and the boundary part 714 includes the curved surface.

As illustrated in FIG. 11A and FIG. 11B, the corner part 713 may include a curved surface. FIG. 11A and FIG. 11B illustrate an example in which the corner part 713 includes: a planar surface 7131; a curved surface 7132 that connects the planar surface 7131 and the side surface 711; and a curved surface 7133 that connects the planar surface 7131 and the side surface 712. Namely, FIG. 11A and FIG. 11B illustrate an example in which a part of the corner part 713 is the curved surface. However, whole of the corner part 713 may be the curved surface. For example, the corner part 713 may include a curved surface that connects the pair of side surfaces 711 and 712 of the convex structure 71, as with the boundary part 714 described below.

The corner part 713 connects the pair of side surfaces 711 and 712 facing opposite directions, as described above. Typically, this corner part 713 includes the curved surface. Therefore, the corner part 713 may be distinguished from the side surfaces 711 and 712 based on whether or not it includes the curved surface. However, in a case where the corner part 713 includes the curved surface (for example, at least one of the curved surfaces 7132 and 7133) that is connected to the side surface 711 or 712, not the corner part 713 but the side surface 711 or 712 may be regarded to includes the curved surface.

As illustrated in FIG. 11A and FIG. 11B, the boundary part 714 may include a curved surface. FIG. 11A and FIG. 11B illustrate an example in which the boundary part 714 includes a curved surface 7141 that connects the side surfaces 711 and 712 that are of the two adjacent convex structures 71, respectively. Namely, FIG. 11A and FIG. 11B illustrate an example in which whole of the boundary part 714 is the curved surface. However, a part of the boundary part 714 may be the curved surface. For example, the boundary part 714 may include: a planar surface; a first curved surface that connects the planar surface and the side surface 711 of one convex structure 71 of the two adjacent convex structures 71; and a second curved surface that connects the planar surface and the side surface 712 of the other convex structure 71 of the two adjacent convex structures 71, as with the corner part 713 described above.

The boundary part 714 connects the side surfaces 711 and 712 that are of the two adjacent convex structures 71, respectively, as described above. Typically, this boundary part 714 includes the curved surface. Therefore, the boundary part 714 may be distinguished from the side surfaces 711 and 712 based on whether or not it includes the curved surface. However, in a case where the boundary part 714 includes the curved surface (for example, the curved surface 7141) that is connected to the side surface 711 or 712, not the boundary part 714 but the side surface 711 or 712 may be regarded to include the curved surface.

Incidentally, in FIG. 11A, the curved surface of the corner part 713 that is connected to each of the side surface 711 and 712 is illustrated by a dotted line for convenience. A part illustrated by the dotted line is a curved part (namely, a rounded part).

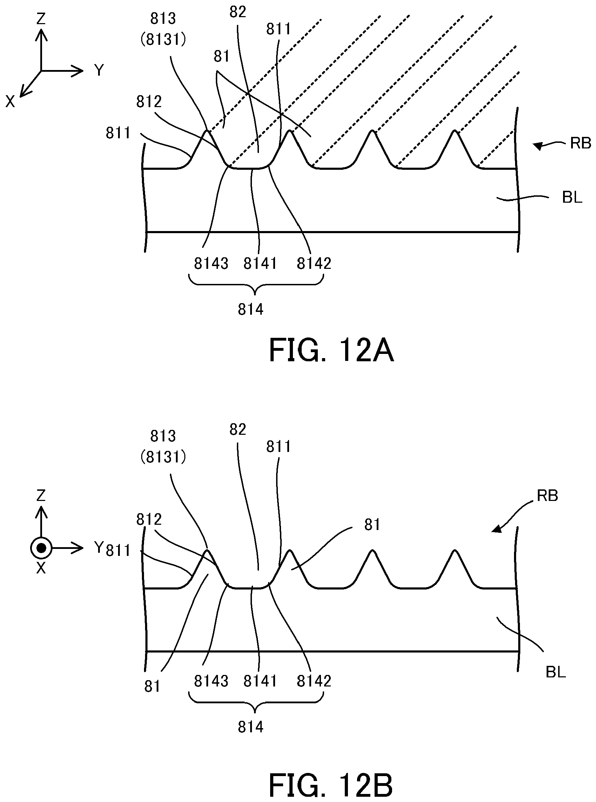

FIG. 12A and FIG. 12B illustrate the turbine blade BL (especially the riblet structure RB) manufactured by using the mold ML2 having the formed mold structure MB in which at least one of the corner part 713 and the boundary part 714 includes the curved surface. FIG. 12A is a perspective view that illustrates the riblet structure formed by using the mold structure MB illustrated in FIG. 11A and FIG. 11B, and FIG. 12B is a cross-sectional view that illustrates the riblet structure formed by using the mold structure MB illustrated in FIG. 11A and FIG. 11B.

As illustrated in FIG. 12A and FIG. 12B, the corner part 813 of the riblet structure RB may include a curved surface, as with the boundary part 714 of the mold structure MB corresponding to the corner part 813. FIG. 12A and FIG. 12B illustrate an example in which the corner part 813 includes a curved surface 8141 that connects the pair of side surfaces 811 and 812 of the convex structure 81. Namely, FIG. 12A and FIG. 12B illustrate an example in which whole of the corner part 813 is the curved surface. However, a part of the boundary part 813 may be the curved surface. For example, in a case where the boundary part 714 includes the planar surface and the two curved surfaces as described above, the corner part 813 may include: a planar surface; a first curved surface that connects the planar surface and one of the pair of side surfaces 811 and 812 of the convex structure 81; and a second curved surface that connects the planar surface and the other one of the pair of side surfaces 811 and 812, as with the boundary part 814 described below.

The corner part 813 connects the pair of side surfaces 811 and 812 facing opposite directions, as described above. Typically, this corner part 813 includes the curved surface. Therefore, the corner part 813 may be distinguished from the side surfaces 811 and 812 based on whether or not it includes the curved surface. However, in a case where the corner part 813 includes the curved surface (for example, the curved surface 8131) that is connected to the side surface 811 or 812, not the corner part 813 but the side surface 811 or 812 may be regarded to include the curved surface.

As illustrated in FIG. 12A and FIG. 12B, the boundary part 814 of the riblet structure RB may include a curved surface, as with the corner part 713 of the mold structure MB corresponding to the boundary part 814. FIG. 12A and FIG. 12B illustrate an example in which the boundary part 814 includes: a planar surface 8141; a curved surface 8142 that connects the planar surface 8141 and the side surface 811; and a curved surface 8143 that connects the planar surface 8141 and the side surface 812. Namely, FIG. 12A and FIG. 12B illustrate an example in which a part of the boundary part 814 is the curved surface. However, whole of the boundary part 814 may be the curved surface. For example, in a case where the corner part 713 includes the curved surface that connects the pair of side surfaces 711 and 712 as described above, the boundary part 814 may include a curved surface that connects the side surface 811 and 8712 that are of two adjacent convex structures 81, respectively, as with the corner part 813 described above.

The boundary part 814 connects the side surfaces 811 and 812 that are of the two adjacent convex structures 81, respectively, as described above. Typically, this boundary part 814 includes the curved surface. Therefore, the boundary part 814 may be distinguished from the side surfaces 811 and 812 based on whether or not it includes the curved surface. However, in a case where the boundary part 814 includes the curved surface (for example, at least one of the curved surfaces 8142 and 8143) that is connected to the side surface 811 or 812, not the boundary part 814 but the side surface 811 or 812 may be regarded to include the curved surface.

Incidentally, in FIG. 12, the curved surface of the corner part 813 that is connected to each of the side surface 811 and the side surface 812 and the curved surface of the boundary part 814 that is connected to each of the side surface 811 and the side surface 812 are illustrated by dotted lines for convenience. The parts illustrated by the dotted lines are curved parts (namely, rounded parts).

In a case where at least one of the corner part 713 and the boundary part 714 includes the curved surface, it is possible to manufacture the turbine blade BL whose shape accuracy is relatively higher, compared to a case where each of the corner part 713 and the boundary part 714 does not include the curved surface. Namely, in a case where the chamfering process is performed on at least one of the corner part 713 and the boundary part 714, it is possible to manufacture the turbine blade BL whose shape accuracy is relatively higher, compared to a case where the chamfering process is not performed on each of the corner part 713 and the boundary part 714.

As one example, in a case where at least one of the corner part 713 and the boundary part 714 includes the curved surface, there is a higher possibility that the molten material flows in the tip of the groove structure 72 (namely, in the boundary part 714), compared to a case where each of the corner part 713 and the boundary part 714 does not include the curved surface. As a result, there is lower possibility that a shape defect at the tip of the convex structure 71 (namely, the corner part 713) of the riblet structure RB formed by the groove structure 72 occurs. Namely, there is a lower possibility that a part of the turbine blade BL is chipped. Therefore, it is possible to manufacture the turbine blade BL whose shape accuracy is relatively high.

As another example, in a case where at least one of the corner part 713 and the boundary part 714 includes the curved surface, the mold ML2 is removed more easily from the solidified material (namely, the turbine blade BL) when the solidified material is removed as the turbine blade BL, compared to a case where each of the corner part 713 and the boundary part 714 does not include the curved surface. As a result, there is a lower possibility that a part of the solidified material remains in the mold ML2. As a result, there is a lower possibility that a part of the turbine blade BL is chipped. Therefore, it is possible to manufacture the turbine blade BL whose shape accuracy is relatively high.

Incidentally, the mold made of zirconia (zirconia ceramics) may be used as the mold ML as described above. In a case where the mold made of zirconia (zirconia ceramics) is used as the mold ML, the mold ML2 is removed more easily from the solidified material (namely, the turbine blade BL) when the solidified material is removed as the turbine blade BL, compared to a case where the mold made of a material different from zirconia is used as the mold ML. However, zirconia is a relatively expensive material. Thus, a cost of the mold ML is reducible by using a mold made of a material (e.g., at least one of pre-hardened steel, as-rolled steel, and stainless steel) that is less expensive than zirconia as the mold ML. In this case, the mold structure MB in which at least one of the corner part 713 and the boundary part 714 includes the curved surface may be formed on the mold ML made of the material different from zirconia. As a result, even in a case where the mold made of the material different from zirconia is used as the mold ML, the mold ML2 is removed more easily from the solidified material (namely, the turbine blade BL) when the solidified material is removed as the turbine blade BL, as with a case where the mold made of zirconia is used as the mold ML. This effect of easier removal of the mold ML2 from the solidified material (namely, the turbine blade BL) is especially advantageous in a case where the mold made of the material different from zirconia is used as the mold ML. Needless to say, the mold structure MB in which at least one of the corner part 713 and the boundary part 714 includes the curved surface may be formed on the mold ML made of zirconia.

A radius of curvature R of the curved surface included in at least one of the corner part 713 and the boundary part 714 may be set to be an appropriate value. For example, in a case where the height H_rb of the convex structure 81 satisfies the first height condition "2.5 micrometers < H_rb < 100 micrometers" as described above, there is a possibility that the effect of the riblet structure RB reducing the resistance of the surface of the turbine blade BL to the fluid is reduced, if the radius of curvature R is larger than 4 micrometers. Thus, the radius of curvature R may be set to be a value that is smaller than 4 micrometers. Moreover, if the radius of curvature R is smaller than 1 micrometer, there is a possibility that it is difficult to form the corner part 713 and the boundary part 714 including the curved surfaces from a viewpoint of an accuracy of manufacturing the mold ML (namely, an accuracy of forming the mold structure MB). Namely, there is a possibility that the shape accuracy of the curved surface included in at least one of the corner part 713 and the boundary part 714 deteriorates. Thus, the radius of curvature R may be set to be a value that is larger than 1 micrometer. Namely, the radius of curvature R may satisfy a first curvature condition "1 micrometer < R < 4 micrometers". As a result, it is possible to form, with high accuracy, the mold structure MB for forming the riblet structure RB by which the effect of reducing the resistance to fluid is properly achieved. Therefore, it is possible to manufacture the turbine blade BL on which the riblet structure RB by which the effect of reducing the resistance to fluid is properly achieved is formed with high accuracy. More preferably, the radius of curvature R may be set to be a value that is larger than 2 micrometers and larger than 3 micrometers in consideration of margin. Namely, the radius of curvature R may satisfy a second curvature condition "2 micrometers < R < 3 micrometers". As a result, it is possible to form, with higher accuracy, the mold structure MB for forming the riblet structure RB by which the effect of reducing the resistance to fluid is properly achieved. Therefore, it is possible to manufacture the turbine blade BL on which the riblet structure RB by which the effect of reducing the resistance to fluid is properly achieved is formed with higher accuracy.

Note that the radius of curvature R of the curved surface included in a certain corner part 713 may be constant regardless of its position on the curved surface. Alternatively, the radius of curvature R of the curved surface included in a certain corner part 713 may vary depending on its position on the curved surface. For example, the radius of curvature R of a first part of the curved surface included in a certain corner part 713 may be different from the radius of curvature R of a second part of the same curved surface included in the same corner part 713. Similarly, the radius of curvature R of the curved surface included in a certain boundary part 714 may be constant regardless of its position on the curved surface. Alternatively, the radius of curvature R of the curved surface included in a certain boundary part 714 may vary depending on its position on the curved surface. For example, the radius of curvature R of a third part of the curved surface included in a certain boundary part 714 may be different from the radius of curvature R of a fourth part of the same curved surface included in the same boundary part 714.

The radius of curvature R of the curved surface included in at least one of the corner part 713 and the boundary part 714 formed on a first part of the mold surface MLs may be different from the radius of curvature R of the curved surface included in at least one of the corner part 713 and the boundary part 714 formed on a second part of the mold surface MI,s that is different from the first part. Namely, the radius of curvature R of the curved surface included in at least one of the corner part 713 and the boundary part 714 may vary depending on a position at which at least one of the corner part 713 and the boundary part 714 is formed. The radius of curvature R of the curved surface included in at least one of the corner part 813 and the boundary part 814 of the riblet structure RB may also vary depending on a position at which at least one of the corner part 813 and the boundary part 814 is formed. In this case, it is possible to manufacture the turbine blade BL on which the riblet structure RB by which the effect of reducing the resistance to fluid is properly achieved is formed with higher accuracy, compared to a case where the radius of curvature R is fixed regardless of the position.

As one example, the radius of curvature R of the curved surface included in at least one of the corner part 713 and the boundary part 714 may vary depending on a formation density of the convex structures 71 at a position at which at least one of the corner part 713 and the boundary part 714 is formed. Namely, the radius of curvature R at a certain position on the mold surface MI,s may be set to be a value depending on the formation density of the convex structures 71 at that position. Note that the formation density of convex structures 71 may be the number of convex structures 71 intersecting with an axis whose length is a unit length and which extends along a direction (namely, a pitch direction) along which a plurality of convex structures 71 are arranged. The formation density of the convex structures 71 may be the number of convex structures 71 existing in an area having a unit length along the direction along which the plurality of convex structures 71 are arranged. The formation density of the convex structures 71 may be the number of convex structures 71 arranged in an unit area.

For example, a formation density of the groove structures 72 substantially formed by the convex structures 71 is high at a position at which the formation density of the convex structures 71 is relatively high. As a result, there is a higher possibility that the molten material cannot enter the plurality of groove structures 72 easily at the position at which the formation density of the groove structures 72 is relatively high, compared to a position at which the formation density of the groove structures 72 is relatively low. Therefore, the radius of curvature R may be relatively large at the position at which the formation density of the convex structures 71 is relatively high so that the molten material can enter the plurality of groove structures 72 easily. On the other hand, the formation density of the groove structures 72 substantially formed by the convex structures 71 is low at a position at which the formation density of the convex structures 71 is relatively low. As a result, there is a lower possibility that the molten material cannot enter the multiple groove structures 72 easily at the position at which the formation density of the groove structures 72 is relatively low, compared to the position at which the formation density of the groove structures 72 is relatively high. Therefore, there is relatively little need to make the radius of curvature R be relatively large at the position at which the formation density of the convex structures 71 is relatively low so that the molten material can enter the plurality of groove structures 72 easily. Therefore, the radius of curvature R may be relatively small at the position at which the formation density of the convex structures 71 is relatively high. In summary, in a case where the formation density of the convex structures 71 on a first part of the mold surface MLs is higher than the formation density of the convex structures 71 on a second part of the mold surface MLs, the radius of curvature R on the first part of the mold surface MLs may be larger than the radius of curvature R on the second part of the mold surface MLs. As a result, it is possible to manufacture the turbine blade BL on which the riblet structure RB by which the effect of reducing the resistance to fluid is properly achieved is formed with high accuracy.

As another example, the radius of curvature R of the curved surface included in at least one of the corner part 713 and the boundary part 714 may vary depending on a temperature of the mold ML2 at a position at which at least one of the corner part 713 and the boundary part 714 is formed or a temperature of the molten material contacting that position (in the below-described description, it is referred to as a "molding temperature"). Namely, the radius of curvature R at a certain position on the mold surface MLs may be set to a value depending on the molding temperature at that position. For example, fluidity of the molten material is relatively low at a position at which the molding temperature is relatively low. As a result, there is a higher possibility that the molten material cannot enter the plurality of groove structures 72 easily at the position at which the molding temperature is relatively low, compared to a position at which the molding temperature is relatively high. Therefore, the radius of curvature R may be relatively large at the position at which the molding temperature is relatively low so that the molten material can enter the plurality of groove structures 72 easily. On the other hand, the fluidity of the molten material is relatively high at the position at which the molding temperature is relatively high. As a result, there is a lower possibility the molten material cannot enter the plurality of groove structures 72 easily at the position at which the molding temperature is relatively high, compared to a position at which the molding temperature is relatively low. Therefore, there is relatively little need to make the radius of curvature R be relatively large at the position at which the molding temperature is relatively high so that the molten material can enter the plurality of groove structures 72 easily. Therefore, the radius of curvature R may be relatively small at the position at which the molding temperature is relatively high. In summary, in a case where the molding temperature at a first part of the mold surface MLs is lower than the molding temperature at a second part of the mold surface MLs, the radius of curvature R at the first part of the mold surface MI,s may be larger than the radius of curvature R at the second part of the mold surface MLs. As a result, it is possible to manufacture the turbine blade BL on which the riblet structure RB by which the effect of reducing the resistance to fluid is properly achieved is formed with high accuracy.

As another example, the radius of curvature R of the curved surface included in at least one of the corner part 713 and the boundary part 714 may vary depending on the depth of the groove structure 72 (namely, the height H_mb of the convex structure 71) at a position where at least one of the corner part 713 and the boundary part 714 is formed. Namely, the radius of curvature R at a certain position on the mold surface MLs may be set to a value depending on the depth of the groove structure 72 at that position. For example, there is a higher possibility that the molten material cannot enter the plurality of groove structures 72 easily at a position at which the relatively deep groove structure 72 is formed, compared to at a position at which the relatively shallow groove structure 72 is formed. Therefore, the radius of curvature R may be relatively large at the position at which the relatively deep groove structure 72 is formed so that the molten material can enter the plurality of groove structures 72 easily. On the other hand, there is a lower possibility that the molten material cannot enter the plurality of groove structures 72 easily at the position at which the relatively shallow groove structure 72 is formed, compared to the position the position at which the relatively deep groove structure 72 is formed. Therefore, there is relatively little need to make the radius of curvature R be relatively large at the position at which the relatively shallow groove structure 72 is formed so that the molten material can enter the plurality of groove structures 72 easily. Therefore, the radius of curvature R may be relatively small at the position at which the relatively shallow groove structure 72 is formed. In summary, in a case where when the depth of the groove structure 72 formed on a first part of the mold surface MLs is deeper than the depth of the groove structure 72 formed on a second part of the mold surface MLs,, the radius of curvature R at the first part of the mold surface MI,s may be larger than the radius of curvature R at the second part of the mold surface MLs. As a result, it is possible to manufacture the turbine blade BL on which the riblet structure RB by which the effect of reducing the resistance to fluid is properly achieved is formed with high accuracy.

Alternatively, the radius of curvature R of the curved surface included in at least one of the corner part 713 and the boundary part 714 may be set to a value depending on a particle size (for example, an average particle size) of the material supplied to the molding space SP to manufacture the turbine blade BL. For example, there is a higher possibility that the molten material cannot enter the plurality of groove structures 72 easily in a case where the particle size is relatively large, compared to a case where the particle size is relatively small. Therefore, the radius of curvature R may be relatively large so that the molten material can enter the plurality of groove structures 72 easily in a case where the turbine blade BL is manufactured by using the material whose particle size is relatively large. Namely, in a case where the turbine blade BL is manufactured by using the material whose particle size is relatively large, the turbine blade BL may be manufactured by using the mold ML2 in which the radius of curvature R is relatively large. On the other hand, there is a lower possibility that the molten material cannot enter the plurality of groove structures 72 easily in a case where the particle size is relatively small, compared to a case where the particle size is relatively large. Thus, there is relatively little need to make the radius of curvature R be relatively large at the position at which the formation density of the convex structures 71 is relatively low so that the molten material can enter the plurality of groove structures 72 easily. Therefore, the radius of curvature R may be relatively small in a case where the turbine blade BL is manufactured by using the material whose particle size is relatively small. Namely, in a case where the turbine blade BL is manufactured by using the material whose particle size is relatively small, the turbine blade BL may be manufactured by using the mold ML2 in which the radius of curvature R is relatively small.

Alternatively, the radius of curvature R of the curved surface included in at least one of the corner part 713 and the boundary part 714 may vary depending on an angle (for example, an angle relative to the axis along the Z axis) of the side surfaces 711 and 712 at ae position where at least one of the corner part 713 and the boundary part 714 is formed.

The radius of curvature R of the curved surface included in at least one of the corner part 713 and the boundary part 714 may be set based on a measured result of the riblet structure RB formed by using a plurality of molds ML having different radii of curvature R, respectively. For example, an operator who manufactures the mold ML (for example, an operator of the processing system SYS) may manually set the radius of curvature R based on the measured result of the riblet structure RB. Alternatively, an apparatus configured to manufacture the mold ML (for example, the processing system SYS) may automatically set the radius of curvature R based on the measured result of the riblet structure RB.

As described above, one of purposes of changing the radius of curvature R of the curved surface included in at least one of the corner part 713 and the boundary part 714 is to realize a situation where the molten material can enter the plurality of groove structures 72 easily. Here, the molten material can enter the plurality of groove structures 72 more easily as the fluidity of the molten material is higher. The fluidity of the molten material is higher as the temperature of the molten material is higher. The temperature of the molten material is higher as the molding temperature is higher. Therefore, in addition to or instead of changing the radius of curvature R, the molding temperature may be adjusted when the turbine blade BL is molded (especially when the molten material is supplied to the molding space SP). Namely, the molding temperature at each position of the mold surface MI,s may be adjusted so that the molten material can enter the plurality of groove structures 72 easily at each position of the mold surface MLs. In other word, the molding temperatures at positions of the mold surface MLs may be different from each other. Even in this case, it is possible to manufacture the turbine blade BL on which the riblet structure RB by which the effect of reducing the resistance to fluid is properly achieved is formed with high accuracy, as with a case where the radius of curvature R is changed.

As one example, the molding temperature at a certain position of the mold surface MLs may be adjusted based on the formation density of the convex structures 71 at that position. For example, as described above, there is a higher possibility that the molten material cannot enter the plurality of groove structures 72 easily at the position at which the formation density of convex structures 71 is relatively high, compared to the position at which the formation density of groove structures 72 is relatively low. Therefore, the molding temperature may be relatively high at the position at which the formation density of the convex structures 71 is relatively high so that the molten material can enter the plurality of groove structures 72 easily. On the other hand, the molding temperature may be relatively low at the position at which the formation density of the convex structures 71 is relatively low. As a result, it is possible to manufacture the turbine blade BL on which the riblet structure RB by which the effect of reducing the resistance to fluid is properly achieved is formed with high accuracy.

As another example, the molding temperature at a certain position of the mold surface MLs may be adjusted based on the depth of the groove structure 72 (namely, the height H_mb of the convex structure 71) at that position. For example, as described above, there is a higher possibility that the molten material cannot enter the plurality of groove structures 72 easily at the position at which the relatively deep groove structures 72 are formed, compared to the position at which the relatively shallow groove structures 72 are formed. Therefore, the molding temperature may be relatively high at the position at which the relatively deep groove structures 72 are formed so that the molten material can enter the plurality of groove structures 72 easily. On the other hand, the molding temperature may be relatively low at the position at which the relatively shallow groove structures 72 are formed. As a result, it is possible to manufacture the turbine blade BL on which the riblet structure RB by which the effect of reducing the resistance to fluid is properly achieved is formed with high accuracy.

As another example, the molding temperature at a certain position of the mold surface MLs may be adjusted based on the radius of curvature R of the curved surface included in at least one of the corner part 713 and the boundary part 714 at that position. For example, as described above, there is a higher possibility that the molten material cannot enter the plurality of groove structures 72 easily at the position at which the radius of curvature R is relatively small, compared to the position at which the radius of curvature R is relatively large. Therefore, the molding temperature may be relatively high at the position at which the radius of curvature R is relatively small so that the molten material can enter the plurality of groove structures 72 easily. On the other hand, the molding temperature may be relatively low at the position at which the radius of curvature R is relatively large. As a result, it is possible to manufacture the turbine blade BL on which the riblet structure RB by which the effect of reducing the resistance to fluid is properly achieved is formed with high accuracy.

As another example, the molding temperature at a certain position of the mold surface MLs may be adjusted based on the presence or absence of the mold structure MB (for example, the groove structure 72) at that position. Namely, the molding temperatures at a position at which the mold structure MB is formed and at a position at which the mold structure MB is not formed on the mold surface MLs may be different from each other. For example, the molding temperature may be relatively high at the position at which the groove structure 72 is formed so that the molten material can enter the plurality of groove structures 72 easily. On the other hand, there is less needed to adjust the molding temperature at the position at which the groove structure 72 is not formed so that the molten material can enter the plurality of groove structures 72 easily. Therefore, the molding temperature may be relatively low at the position at which the groove structure 72 is not formed. As a result, it is possible to manufacture the turbine blade BL on which the riblet structure RB by which the effect of reducing the resistance to fluid is properly achieved is formed with high accuracy.

As another example, the molding temperature may be adjusted based on the particle size (for example, the average particle size) of the material supplied to the molding space SP to manufacture the turbine blade BL. For example, as described above, there is a higher possibility that the molten material cannot enter the plurality of groove structures 72 easily in a case where the particle size is relatively large, compared to a case where the particle size is relatively small. Therefore, the molding temperature may be relatively high in a case where the turbine blade BL is manufactured by using the material whose particle size is relatively large so that the molten material can enter the plurality of groove structures 72 easily. On the other hand, the molding temperature may be relatively low in a case where the turbine blade BL is manufactured by using the material whose particle size is relatively small.

Note that the riblet structure RB in which at least one of the corner part 813 and the boundary part 814 includes the curved surface may be formed not only in a case where the turbine blade BL is manufactured by using the mold ML2 but also in a case where the turbine blade BL is manufactured by using any method. For example, the processing system SYS may form, on the riblet structure surface BLs, the riblet structure RB in which at least one of the corner part 813 and the boundary part 814 includes the curved surface.

### (3-3) Third specific example of mold ML used for manufacturing turbine blade BL on which riblet Structure RB is formed

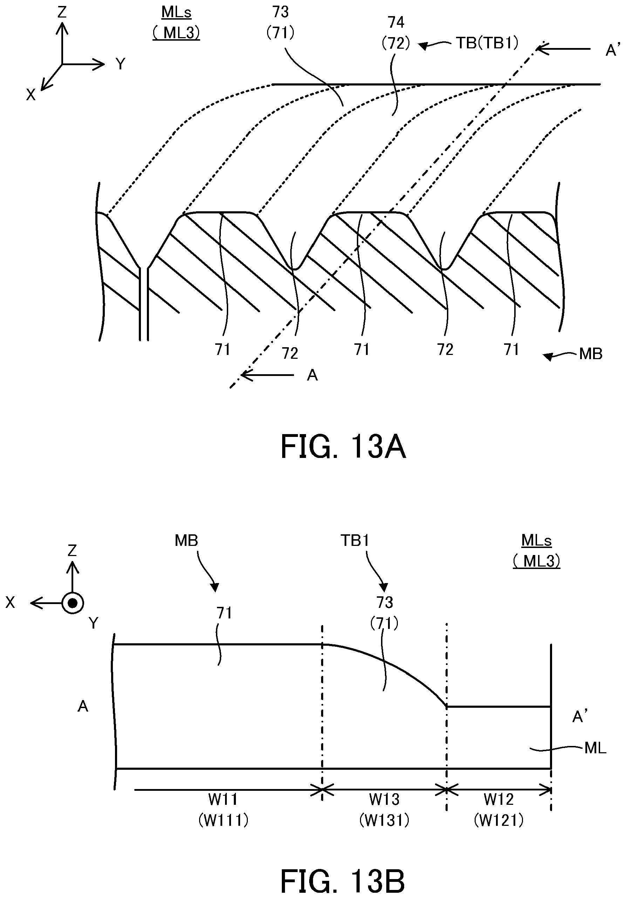

Next, with reference to FIG. 13 to FIG. 16, a third specific example of the mold ML used to manufacture the turbine blade BL on which the riblet structure RB is formed will be described. In the below-described description, the third specific example of mold ML is referred to as a "mold ML3". The mold ML3 is different from at least one of the above-described molds MI,1 ML2 in that the mold surface MLs includes: a forming area W11 in which the mold structure MB is formed; a non-forming area W12 in which the mold structure MB is not formed; and a terminal area W13 which is located between the forming area W11 and the non-forming area W12 and in which a terminal structure TB is formed. The terminal structure TB may be regarded constitute a part of the mold structure MB. Other feature of the mold ML3 may be same as other feature of at least one of the molds ML1 and ML2.

The forming area W11 and the non-forming area W12 may be arranged along the direction along which each of the plurality of convex structures 71 constituting the mold structure MB extends. In this case, a first terminal structure TB (in the below-described description, it is referred to as a "terminal structure TB1") may be formed in the terminal area W13 that is located between the forming area W11 and the non-forming area W12 along the direction along which each of the plurality of convex structures 71 extends.

The forming area W11 and the non-forming area W12 may be arranged along the direction along which the plurality of convex structures 71 constituting the mold structure MB are arranged. In this case, a second terminal structure TB (in the below-described description, it is referred to as a "terminal structure TB2") may be formed in the terminal area W13 that is located between the forming area W11 and the non-forming area W12 along the direction along which the plurality of convex structures 71 are arranged.

Nex, the first terminal structure TB1 and the second terminal structure TB2 will be described in order. In the below-described description, the forming area W11, the terminal area W13, and the non-forming area W12, which are arranged along the direction along which each of the plurality of convex structures 71 extends, are referred to as a forming area W111, a terminal area W131, and a non-forming area W121, respectively. On the other hand, the forming area W11, the terminal area W13, and the non-forming area W12 that are arranged along the direction along which the plurality of convex structures 71 are arranged are referred to as a forming area W112, a terminal area W132, and a non-forming area W122, respectively.

### (3-3-1) First Terminal Structure TB1

Firstly, with reference to FIG. 13A and FIG. 13B, the first terminal structure TB1 will be described. FIG. 13A is a perspective view that illustrates the first terminal structure TB1, and FIG. 13B is a cross-sectional view of the first terminal structure TB1 (a A-A' cross-sectional view in FIG. 13A).

As illustrated in FIG. 13A and FIG. 13B, the first terminal structure TB1 is formed in the terminal area W131, which is located between the forming area W111 and the non-forming area W121 that are arranged along the direction along which each of the plurality of convex structures 71 extends (in the example illustrated in FIG. 13A and FIG. 13B, the X-axis direction). The first terminal structure TB1 includes the plurality of convex structures 71 and the plurality of groove structures 72, as with the mold structure MB. In the below-described description, the convex structure 71 and the groove structure 72 constituting the first terminal structure TB1 formed in the terminal area W131 are referred to as a convex structure 73 and a groove structure 74, respectively, to distinguish them from the convex structure 71 and the groove structure 72 constituting the mold structure MB formed in the forming area W111.

The plurality of convex structures 73 formed in the terminal area W131 are connected to the plurality of convex structures 71 formed in the forming area W111, respectively. The plurality of groove structures 74 formed in the terminal area W131 are connected to the plurality of groove structures 72 formed in the forming area W111, respectively. Each of the plurality of convex structures 73 extends from the forming area W111 to the non-forming area W121. Since the forming area W111 and the non-forming area W121 are arranged along the direction along which the convex structure 71 extends, it can be said that each of the plurality of convex structures 73 extends along the direction along which the convex structure 71 extends.

The height of at least one of the plurality of convex structures 73 formed in the terminal area W131 varies depending on the position along the direction along which the convex structure 73 extends. Specifically, the height of at least one convex structure 73 is lower as the at least one convex structure 73 is closer from the forming area W111 to the non-forming area W121. Incidentally, since the height of the convex structure 73 (71) is equivalent to the depth of the groove structure 74 (72) as described above, the depth of at least one of the plurality of groove structures 74 formed in the terminal area W131 may be regarded to vary depending on the position along the direction along which the groove structure 74 extends. Specifically, the depth of at least one groove structure 74 may be regarded to be shallower as the at least one groove structure 74 is closer from the forming area W111 to the non-forming area W121.

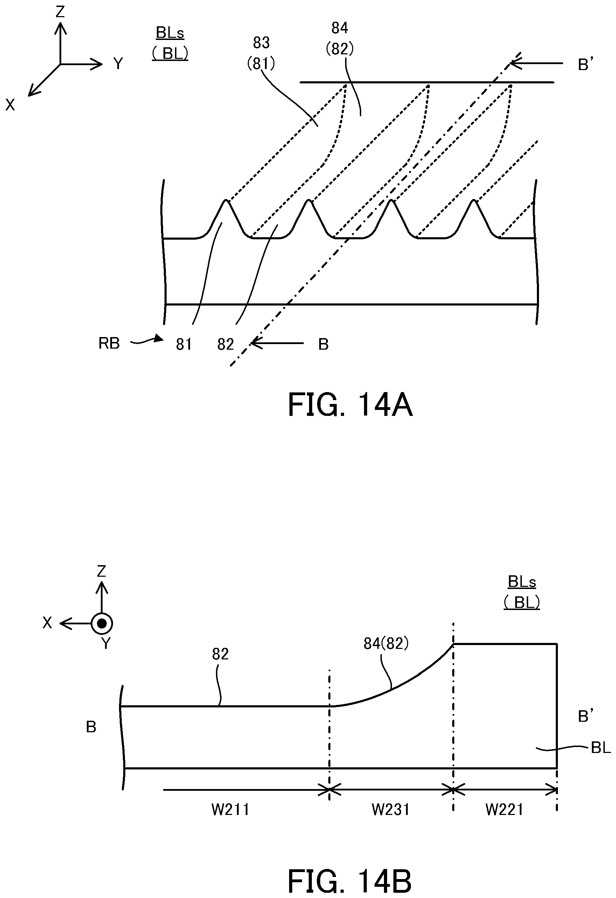

FIG. 14A and FIG. 14B illustrate the turbine blade BL (especially, the riblet structure RB) manufactured by using the mold ML3 in which the first terminal structure TB1 is formed. FIG. 14A is a perspective view that illustrates a part of the turbine blade BL manufactured by using the mold ML3 in which the first terminal structure TB1 illustrated in FIG. 13A and FIG. 13B is formed, and FIG. 14B a cross-sectional view that illustrates a part of the turbine blade BL manufactured by using the mold ML3 in which the first terminal structure TB1 illustrated in FIG. 13A and FIG. 13B is formed (a B-B' cross-section view in FIG. 14A).

As illustrated in FIG. 14A and FIG. 14B, the riblet structure surface BLs includes a forming area W211 in which the riblet structure RB is formed by the mold structure MB formed in the forming area W111. Furthermore, the riblet structure surface BLs includes a non-forming area W221 which is alongside the forming area W211 along the direction along which the convex structure 81 constituting the riblet structure RB extends and in which the riblet structure RB is not formed. Furthermore, the riblet structure surface BLs includes a terminal area W231 which is formed between the forming area W211 and the non-forming area W221 along the direction along which the convex structure 81 extends, and in which the convex structure 81 and the groove structure 82 are formed by the first terminal structure TB1 formed in the forming area W131. In the below-described description, the convex structure 81 and groove structure 82 formed in the terminal area W231 are referred to as a convex structure 83 and a groove structure 84, respectively, to distinguish them from the convex structure 81 and groove structure 82 formed in the forming area W211.

The plurality of convex structures 83 formed in the terminal area W231 are connected to the plurality of convex structures 81 formed in the forming area W211, respectively. The plurality of groove structures 84 formed in the terminal area W231 are connected to the plurality of groove structures 82 formed in the forming area W211, respectively. Each of the plurality of convex structures 83 extends from the forming area W211 to the non-forming area W221. Since the forming area W211 and the non-forming area W221 are arranged along the direction along which the convex structure 81 extends, it can be said that each of the plurality of convex structures 83 extends along the direction along which the convex structure 81 extends.

Here, since the height of at least one of the plurality of convex structures 73 formed in the terminal area W131 varies as described above, the depth of at least one of the plurality of groove structures 84 formed in the terminal area W231 varies. Specifically, the depth of the at least one groove structure 84 varies depending on the position along the direction along which the groove structure 84 extends. More specifically, the depth of at least one groove structure 84 is shallower as the at least one groove structure 84 is closer from the forming area W211 to the non-forming area W221. Furthermore, since the depth of the groove structure 84 (82) is equivalent to the height of the convex structure 83 (81) as described above, the height of at least one of the plurality of convex structures 83 formed in the terminal area W231 may be regarded to vary depending on the position along the direction along which the convex structure 83 extends. Specifically, the height of at least one convex structure 83 may be considered to be lower as the at least one convex structure 83 is closer from the forming area W211 to the non-forming area W221.

In a case where the turbine blade BL is manufactured by using the mold ML3 in which the first terminal structure1 is formed, the mold ML3 can be removed from the turbine blade BL more easily, compared to a case where the turbine blade BL is manufactured by using the mold ML in which the first terminal structure TB1 is not formed. As a result, there is a lower possibility that a part of the solidified material remains in the mold ML3. As a result, there is a lower possibility that a part of the turbine blade BL is chipped. Therefore, it is possible to manufacture the turbine blade BL whose shape accuracy is relatively high. Moreover, the turbine blade BL that is manufactured by using the mold ML3 in which the first terminal structure TB1 is formed can reduce the resistance of the surface of the turbine blade BL to the fluid at a position corresponding to the position of the first terminal structure TB1.

### (3-3-2) Second Terminal Structure TB2

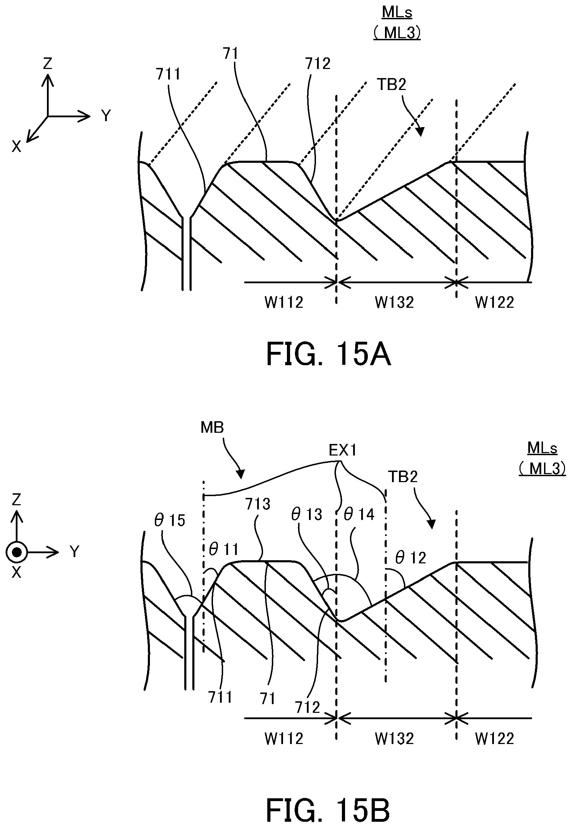

Next, with reference to FIG. 15A and FIG. 15B, the second terminal structure TB2 will be described. FIG. 15A is a perspective view that illustrates the second terminal structure TB2, and FIG. 15B is a cross-sectional view of the second terminal structure TB2.

As illustrated in FIG. 15A and FIG. 15B, the second terminal structure TB2 is formed in the terminal area W132, which is located between the forming area W112 and the non-forming area W122 along the direction along which the plurality of convex structures 71 are arranged (in the examples illustrated in FIG. 15A and FIG. 15B, the Y-axis direction). The second terminal structure TB2 is a structure that is formed in the terminal area W132 so that an inclination angle θ12 between the surface of the terminal area W132 and an axis EX1 that is along the Z-axis direction (namely, the direction toward which the convex structure 71 protrudes) is larger than an inclination angle θ11 between the side surface 711 of the convex structure 71 and the axis EX1. The surface of the terminal area W132 may be regarded to be equivalent to the surface of the second terminal structure TB2 formed in the terminal area W132. In this case, the second terminal structure TB2 may be regarded to be a structure that is formed in the terminal area W132 so that the inclination angle θ12 between the surface of the second terminal structure TB2 and the axis EX1 that is along the Z-axis direction (namely, the direction toward which the convex structure 71 protrudes) is larger than the inclination angle θ11 between at least one of the side surfaces 711 and 712 of the convex structure 71 and the axis EX1.

The second terminal structure TB2 may be a structure that is formed in the terminal area W132 so that the inclination angle θ12 is larger than an inclination angle θ13 between the side surface 712 of the convex structure 71 and the axis EX1, in addition to or instead of the inclination angle θ12 being larger than the inclination angle θ11. Moreover, the second terminal structure TB2 may be a structure that is formed in the terminal area W132 so that an angle θ14 between the surface of the terminal area W132 and at least one of the side surfaces 711 and 712 of the convex structure 71 adjacent to the terminal area W132 is larger than an angle θ15 between the side surfaces 711 and 712 that are of two convex structures 71, in addition to or instead of the inclination angle θ12 being larger than at least one of the inclination angles θ11 and θ13.

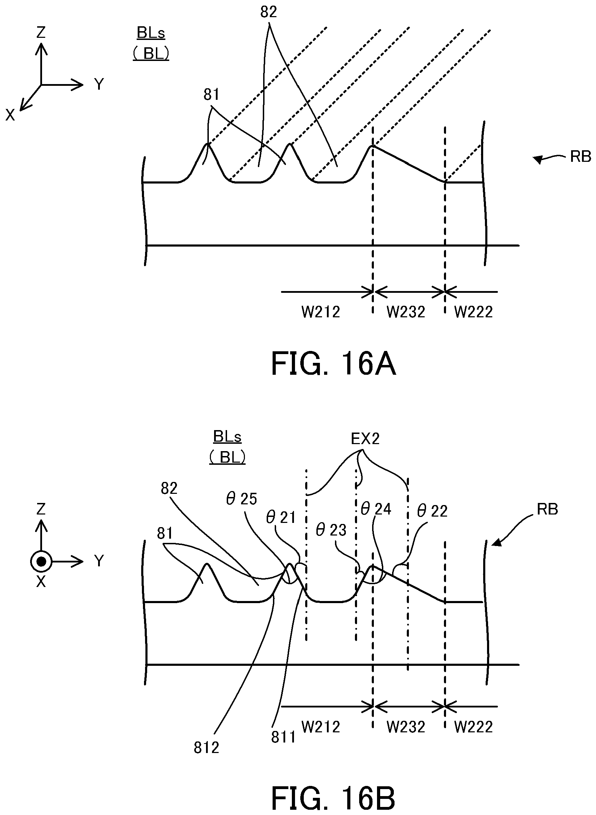

FIG. 16A and FIG. 16B illustrate the turbine blade BL (especially, the riblet structure RB) manufactured by using the mold ML3 in which the second terminal structure TB2 is formed. FIG. 16A is a perspective view that illustrates a part of the turbine blade BL manufactured by using the mold ML3 in which the second terminal structure TB2 illustrated in FIG. 15A and FIG. 15B is formed, and FIG. 16B a cross-sectional view that illustrates a part of the turbine blade BL manufactured by using the mold ML3 in which the second terminal structure TB2 illustrated in FIG. 15A and FIG. 15B is formed.

As illustrated in FIG. 16A and FIG. 16B, the riblet structure surface BLs includes a forming area W212 in which the riblet structure RB is formed by the mold structure MB formed in the forming area W 112. Furthermore, the riblet structure surface BLs includes a non-forming area W222 which is alongside the forming area W212 along the direction along which the convex structures 81 constituting the riblet structure RB are arranged and in which the riblet structure RB is not formed. Furthermore, the riblet structure surface BLs includes a terminal area W232 which is formed between the forming area W212 and the non-forming area W222 along the direction along which the convex structures 81 are arranged and on the surface of which a structure is formed by the second terminal structure TB2 formed in the forming area W132. Here, as described above, the second terminal structure TB2 for forming the structure in the terminal area W232 is the structure that formed in the terminal area W132 so that the inclination angle θ12 between the surface of the terminal area W132 and the axis EX1 along the Z-axis direction is larger than the inclination angle θ11 between the side surface 711 of the convex structure 71 and the axis EX1. As a result, an inclination angle θ22 between a surface of the terminal area W232 in which the structure is formed by the second terminal structure TB2 (namely, a surface of the structure formed in the terminal area W232) and the axis EX2 that is along the Z-axis direction (namely, the direction toward which the convex structure 81 protrudes) is larger than an angle θ22 between the side surface 811 of the convex structure 81 and the axis EX2.

Moreover, as described above, the second terminal structure TB2 may be the structure that is formed in the terminal area W132 so that the inclination angle θ12 is larger than the inclination angle θ13 between the side surface 712 of the convex structure 71 and the axis EX1. In this case, the inclination angle θ22 between the surface of the terminal area W232 in which the structure is formed by the second terminal structure TB2 (namely, the surface of the structure formed in the terminal area W232) and the axis EX2 that is along the Z-axis direction (namely, the direction toward which the convex structure 81 protrudes) is larger than an inclination angle θ23 between the side surface 812 of the convex structure 81 and the axis EX2.

Moreover, as described above, the second terminal structure TB2 may be the structure that is formed in the terminal area W132 so that the angle θ14 between the surface of the terminal area W132 and at least one of the side surfaces 711 and 712 of the convex structure 71 adjacent the terminal area W132 is larger than the angle θ15 between the side surfaces 711 and 712 that are of two adjacent convex structures 71, respectively. In this case, an angle θ24 between the surface of the terminal area W232 in which the structure is formed by the second terminal structure TB2 (namely, the surface of the structure formed in the terminal area W232) and at least one of the side surfaces 811 and 812 of the convex structure 81 adjacent to the terminal area W232 is larger than an angle θ25 between the side surfaces 811 and 812 that are of two adjacent two convex structure 81.

In a case where the turbine blade BL is manufactured by using the mold ML3 in which the second terminal structure TB2 is formed, a slope of the terminal area W232 is relatively gentle. Thus, the mold ML3 can be removed from the turbine blade BL easily. As a result, there is a lower possibility that a part of the solidified material remains in the mold ML3. As a result, there is a lower possibility that a part of the turbine blade BL is chipped. Therefore, it is possible to manufacture the turbine blade BL whose shape accuracy is relatively high.

### (4) Design Apparatus

Next, a design apparatus 5 for designing the shape of the riblet structure RB formed on the turbine blade BL will be described.

### (4-1) Configuration of Design Apparatus 5

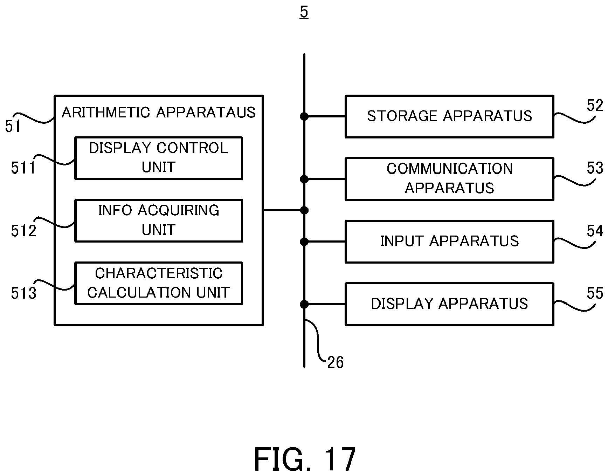

Firstly, with reference to FIG. 17, a configuration of the design apparatus 5 will be described. FIG. 17 is a block diagram that illustrates the configuration of the design apparatus 5.

As illustrated in FIG. 17, the design apparatus 5 includes: an arithmetic apparatus 51; a storage apparatus 52, and a communication apparatus 53. Furthermore, the design apparatus 5 may include an input apparatus 54 and an output apparatus 55. However, the design apparatus 5 may not include at least one of the input apparatus 54 and the output apparatus 55. The arithmetic apparatus 51, the storage apparatus 52, the communication apparatus 53, the input apparatus 54, and the output apparatus 55 may be connected through a data bus 56.

The arithmetic apparatus 51 may include, for example, at least one of a CPU and a GPU. The arithmetic apparatus 51 reads a computer program. For example, the arithmetic apparatus 51 may read a computer program stored in the storage apparatus 52. For example, the arithmetic apparatus 51 may read a computer program stored in a computer-readable and non-transitory recording medium by using a recording medium reading apparatus that is not illustrated. The arithmetic apparatus 51 may acquire (namely, may download or read) a computer program from an non-illustrated apparatus located outside the design apparatus 5 through the communication apparatus 53. The arithmetic apparatus 51 executes the read computer program. As a result, a logical functional block is implemented in the arithmetic apparatus 51 to perform the operation to be performed by the design apparatus 5. Namely, the arithmetic apparatus 51 can serve as a control apparatus to implement the logical functional block for performing the operation to be performed by the design apparatus 5.

In the present example embodiment, the logical functional block for performing a design operation for designing the shape of the riblet structure RB is implemented in the arithmetic apparatus 51. FIG. 17 illustrates one example of the logical functional block implemented in the arithmetic apparatus 51 to perform the design operation. As illustrated in FIG. 17, a display control unit 511, an information acquisition unit 512, and a characteristic calculation unit 513 are implemented in the arithmetic apparatus 51. Note that the operations of the display control unit 511, the information acquisition unit 512, and the characteristic calculation unit 513 will be described in detail later.

Incidentally, in a case where the riblet structure RB is formed by using the mold ML in which the mold structure MB is formed, the design operation for designing the shape of the riblet structure RB may be regarded to be equivalent to an operation for designing the mold ML (especially, the mold structure MB).

The storage apparatus 52 is configured to store desired data. For example, the storage apparatus 52 may temporarily store the computer program to be executed by the arithmetic apparatus 51. The storage apparatus 52 may temporarily store data that is temporarily used by the arithmetic apparatus 51 when the arithmetic apparatus 51 is executing the computer program. The storage apparatus 52 may store data for long-term storage by the design apparatus 5. The storage apparatus 52 may include at least one of a RAM (Random Access Memory), a ROM (Read Only Memory), a hard disk apparatus, magneto-optical disk apparatus, a SSD (Solid State Drive), and a disk array apparatus. Namely, the storage apparatus 52 may include a non-transitory recording medium.

The communication apparatus 53 is configured to communicate with an apparatus external to the design apparatus 5 through an non-illustrated communication network.

The input apparatus 54 is an apparatus that receives an input of information to the design apparatus 5 from an outside of the design apparatus 5. For example, the input apparatus 54 may include a user-operable operating apparatus (for example, at least one of a keyboard, a mouse, and a touch panel). For example, the input apparatus 54 may include a reading apparatus configured to read information recorded as data on a recording medium that can be external to the design apparatus 5.

The output apparatus 55 is an apparatus that outputs information to the outside of the design apparatus 5. For example, the output apparatus 55 may output the information as an image. Namely, the output apparatus 55 may include a display apparatus (a so-called display) configured to display the image indicating the information to be outputted. For example, output apparatus 55 may output the information as audio. Namely, the output apparatus 55 may include an audio apparatus (a so-called speaker) configured to output the sound. For example, the output apparatus 55 may output the information on paper. Namely, the output apparatus 55 may include a printing apparatus (a so-called printer) configure to print the desired information on the paper.

### (4-2) Design Operation by Design Apparatus 5

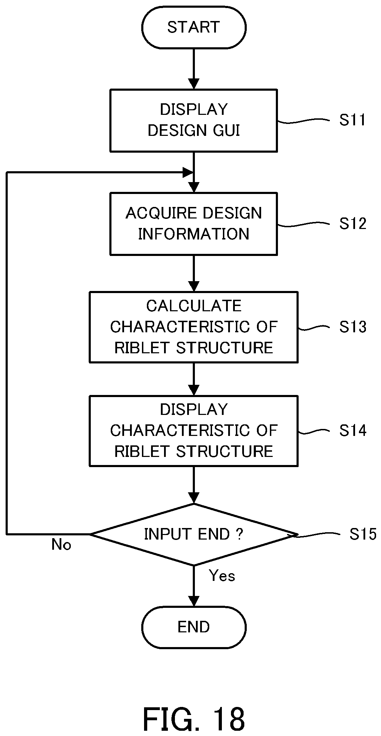

Next, with reference to FIG. 18, the design operation performed by the design apparatus 5 will be described. FIG. 18 is a flowchart that illustrates a flow of the design operations performed by the design apparatus 5.

As illustrated in IG. 18, the display control unit 511 controls the output apparatus 55 (especially, the display apparatus) to display a design GUI (Graphical User Interface) 57 (a step S11).

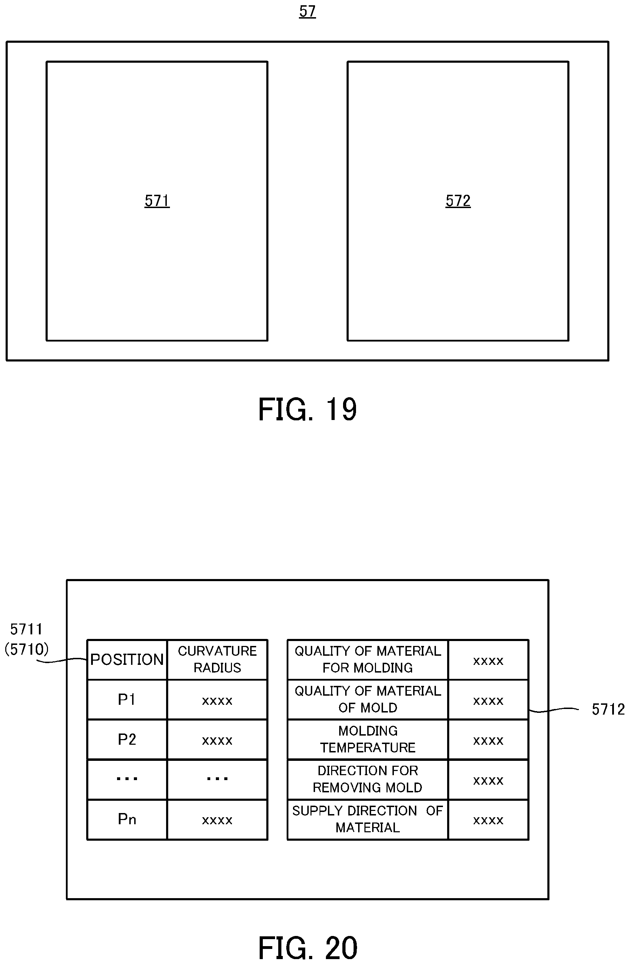

One example of the design GUI 57 is illustrated in FIG. 19. As illustrated in FIG. 19, the design GUI 57 may include an input screen 571 and an output screen 572.

The input screen 571 is a screen (namely, an input part) including a GUI that can be operated by a user to design the shape of the riblet structure RB. The user may operate the input screen 571 by using the input apparatus 54. Namely, the user may use the input apparatus 54 to perform an operation on the input screen 571 to design the shape of the riblet structure RB. As a result, the information acquisition unit 512 acquires design information related to the shape of the riblet structure RB designed by the user by using the design GUI 57 (a step S12 in FIG. 18).

One example of the input screen 571 is illustrated in FIG. 20. The input screen 571 may include a shape designation GUI 5710 for designating the shape of the riblet structure RB. In the example illustrated in FIG. 20, the input screen 571 includes, as one example of the shape designation GUI 5710, a curvature designation GUI 5711 for designating the radius of curvature R of the curved surface included in at least one of the corner part 813 and the boundary part 814 described above. However, the input screen 571 may include the shape designation GUI 5710 different from the curvature designation GUI 5711. For example, the input screen 571 may include the shape designation GUI 5710 for designating at least one of the height H_rb of the convex structure 81, the pitch P_rb of the convex structure 81, the depth of the groove structure 82, the pitch of the groove structure 82, the width of the convex structure 81, the width of the groove structure 82, the position of the convex structure 81, the position of the groove structure 82, the shape of the convex structure 81 and the shape of the groove structure 82.

Note that at least a part of the information inputted from the user using the input screen 571 may be inputted to the design apparatus 5 from an apparatus that is different from the design apparatus 5. For example, information related to at least one of the height H_rb of the convex structure 81, the pitch P_rb of the convex structure 81, the depth of the groove structure 82, the pitch of the groove structure 82, the width of the convex structure 81, the width of the groove structure 82, the position of the convex structure 81, the position of the groove structure 82, the shape of the convex structure 81 and the shape of the groove structure 82 may be inputted to the design apparatus 5 from the apparatus that is a different from the design apparatus 5.

As illustrated in FIG. 20, the curvature designation GUI 5711 may include a GUI by which the radii of curvature R of the plurality of corner parts 813 constituting the riblet structure RB can be designated individually. In this case, the curvature designation GUI 5711 may include a GUI by which a position at which each corner part 813 is formed and the radius of curvature of the corner part 813 formed at that position can be designated. The curvature designation GUI 5711 may include a GUI by which the radii of curvature R of the plurality of boundary parts 814 constituting the riblet structure RB can be designated individually. In this case, the curvature designation GUI 5711 may include a GUI by which a position at which each boundary part 814 is formed and the radius of curvature of the boundary part 814 formed at that position can be designated. Alternatively, the curvature designation GUI 5711 may include a GUI by which the radii of curvature R of the plurality of corner parts 813 constituting the riblet structure RB can be designated collectively. The curvature designation GUI 5711 may include a GUI by which the radii of curvature R of the plurality of boundary parts 814 constituting the riblet structure RB can be designated collectively.

Incidentally, since the corner part 813 of the riblet structure RB are formed by the boundary part 714 of the mold structure MB, the curvature designation GUI 5711 for designating the radius of curvature R of the curved surface included in the corner part 813 of the riblet structure RB is GUI may be regarded to be equivalent to a GUI for designating the radius of curvature R of the curved surface included in the boundary part 714 of the mold structure MB. Similarly, since the boundary part 714 of the riblet structure RB is formed by the corner part 713 of the mold structure MB, the curvature designation GUI 5711 for designating the radius of curvature R of the curved surface included in the boundary part 814 of the riblet structure RB may be regarded to be equivalent to a GUI for designating the radius of curvature R of the curved surface included in the corner part 713 of the mold structure MB.

The input screen 571 may include, in addition to or instead of the curvature designation GUI 5711, a condition designation GUI 5712 for designating a condition for forming the riblet structure RB. In the example illustrated in FIG. 20, the input screen 571 includes the condition designation GUI 5712 for designating the conditions for forming the riblet structure RB in a case where the riblet structure RB is formed by using the mold ML described above. In the example illustrated in FIG. 20, the input screen 571 includes the condition designation GUI 5712 for designating a type of the material used to manufacture the turbine blade BL (namely, the material supplied to the molding space SP), a type of the material of the mold ML, the molding temperature, the direction along which the mold ML is removed from the manufactured turbine blade BL (namely, a pulling direction), and a supply direction of the material to the molding space SP.

Again in FIG. 18, the information acquisition unit 512 acquires the information inputted into the input screen 571 of the design GUI 57 as design information related to the shape of the riblet structure RB designed by the user (the step S12).

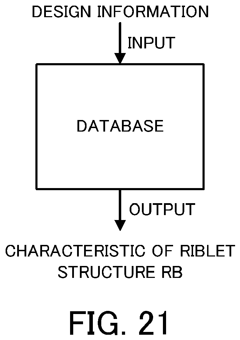

Then, the characteristic calculation unit 513 calculates, based on the design information acquired at the step S12, a characteristics of the riblet structure RB to be realized when the riblet structure RB is assumed to be formed based on the design information (a step S13). For example, the characteristic calculation unit 513 may calculate the characteristic of the riblet structure RB by using a database indicating a relationship between the shape of the riblet structure RB (furthermore, if necessary, the conditions for forming the riblet structure RB) and the characteristic of the riblet structure RB. As one example, as illustrated in FIG. 21, the characteristic calculation unit 513 may calculate the characteristic of the riblet structure RB by inputting the design information into the database. Alternatively, for example, the characteristic calculation unit 513 may calculate the characteristic of the riblet structure RB by using a computing model that is buildable by machine learning. The computing model may be, for example, a computing model configured to output characteristic information related to the characteristics of the riblet structure RB when the design information is inputted thereto.

The display control unit 511 controls the output apparatus 55 (especially, the display apparatus) to display the characteristic of the riblet structure RB calculated at the step S13 (a step S14). For example, the display control unit 511 may control the output apparatus 55 (especially, the display apparatus) to display the characteristic of the riblet structure RB calculated at the step S13 on the output screen 572 included in the design GUI 57.

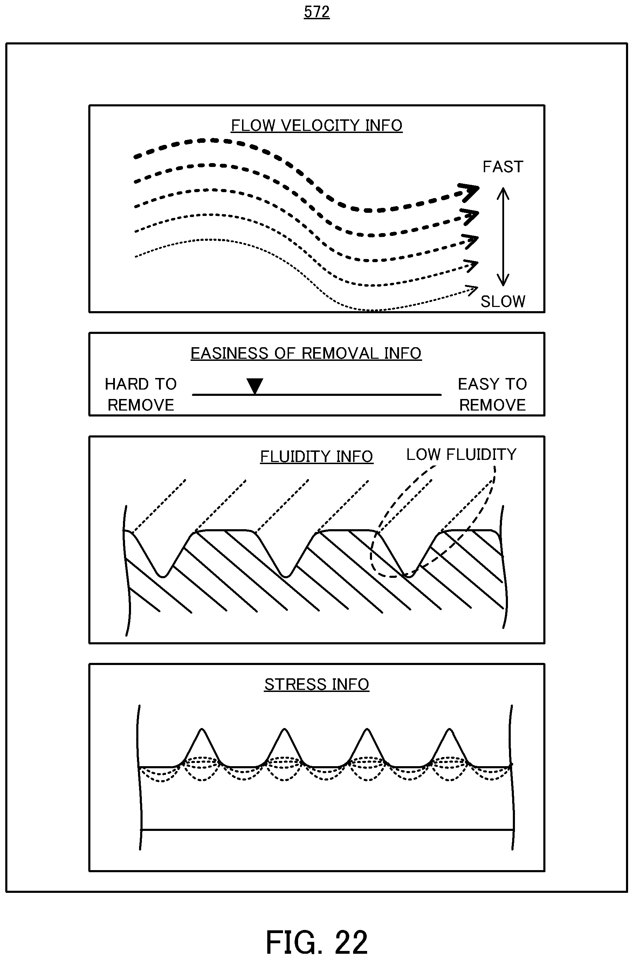

One example of the output screen 572 is illustrated in FIG. 22. In the example illustrated in FIG. 22, a flow velocity of the fluid flowing on the surface of the turbine blade BL in which the riblet structure RB is formed (especially, the riblet structure surface BLs on which the riblet structure RB is formed), an easiness for removing (namely, an easiness for detaching), from the mold ML, the turbine blade BL on which the riblet structure is RB, the fluidity of the material supplied to the molding space SP of the mold ML in the molding space SP, the fluidity of the material supplied to the molding space SP of the mold ML in the molding space SP, and a distribution of stress applied to the surface of the turbine blade BL (especially, the riblet structure surface BLs on which the riblet structure RB is formed) under a condition where the turbine blade BL on which the riblet structure RB is formed is actually used.

The user may design the shape of the riblet structure RB by using the input screen 571 while referring to the characteristic of the riblet structure RB displayed in the output screen 572. Each time the user newly inputs, as the design information, the information for designing the shape of the riblet structure RB by using the input screen 571, the characteristic of the riblet structure RB calculated based on the new design information may be newly displayed in the output screen 572. In this case, the user may continue to design the shape of the riblet structure RB by using the input screen 571 until the riblet structure RB having the desired characteristic is realized (the step S15). As a result, the user can properly design the shape of the riblet structure RB having the desired characteristic.

The design information may be used to form the riblet structure RB (namely, to manufacture the turbine blade BL on which the riblet structure RB is formed). For example, the design information may be used to generate information for controlling the processing system SYS to form the riblet structure RB on the turbine blade BL. For example, the design information may be used to generate information for manufacturing the mold ML described above.

Incidentally, considering that the characteristic of the riblet structure RB is calculated based on the design information and the database or the computing model buildable by the machine learning as described above, the design information may be calculated based on the characteristic information related to the characteristic of the riblet structure RB and the database or the computing model buildable by the machine learning. Thus, the design apparatus 5 may acquire the characteristic information related to the characteristic of the riblet structure RB which the user wishes to realize, and calculate, based on the information and the database or the computing model buildable by the machine learning, the design information designating the shape of the riblet structure RB having the characteristic which the user wishes to realize. Namely, the design apparatus 5 may automatically recommend the shape of the riblet structure RB which the user wishes to realize, without requiring the user's input of the information for designing the shape of the riblet structure RB.

### (5) Modified Example of Processing System SYS

Next, a modified example of the processing system SYS will be described.

### (5-1) First Modified Example

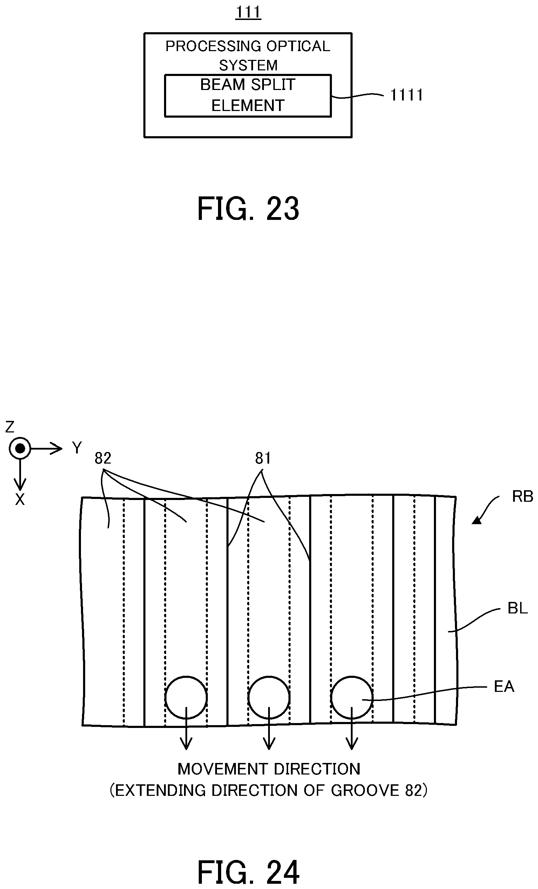

In the first modified example, the processing system SYS may process the turbine blade BL by irradiating the turbine blade BL (alternatively, any workpiece W, same in the below-described description) with plurality of processing lights EL. For example, the processing system SYS may form the riblet structure RB on the turbine blade BL by irradiating the turbine blade BL with the plurality of processing lights EL. In this case, the processing system SYS may include the processing optical system 111 including a beam split element 1111 that splits the light from the processing light source 2 into the plurality of processing lights EL, as illustrated in FIG. 23.

The processing system SYS may simultaneously form a plurality of groove structures 82 by using the plurality of processing lights EL, respectively. For example, as illustrated in FIG. 24 that is a planar view illustrating the plurality of processing lights EL with which the turbine blade BL is irradiated, the processing system SYS may irradiate the turbine blade BL with the plurality of processing lights EL so that a plurality of target irradiation areas EA that are irradiated with the plurality of processing lights EL, respectively, are arranged along a direction along which the plurality of groove structures 82 are arranged (the Y-axis direction in the example illustrated in FIG. 24) and the plurality of target irradiation areas EA move along the direction along which the groove structures 82 extend (the Y-axis direction in the example illustrated in FIG. 24). As a result, the plurality of groove structures 82 are formed simultaneously.

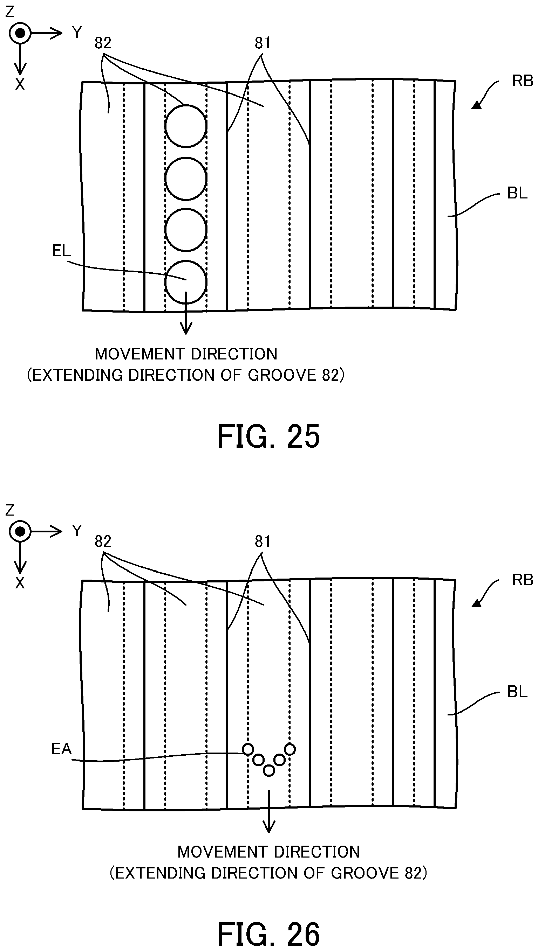

The processing system SYS may form a single groove structure 82 by using at least two of the plurality of processing lights EL. For example, as illustrated in FIG. 25 that is a planar view illustrating the plurality of processing lights EL with which the turbine blade BL is irradiated, the processing system SYS may irradiate the turbine blade BL with the at least two processing lights EL so that at least two target irradiation areas EA that are irradiated with the at least two processing lights EL, respectively, are arranged along a direction along which the groove structure 82 extends (the X-axis direction in the example illustrated in FIG. 25) and the at least two target irradiation areas EA move along the direction along which the groove structure 82 extends. Alternatively, as illustrated in FIG. 26 that is a planar view illustrating the plurality of processing lights EL with which the turbine blade BL is irradiated, the processing system SYS may irradiate the turbine blade BL with the at least two processing lights EL so that the at least two target irradiation areas EA are distributed in a desired distribution pattern (in the example illustrated in FIG. 26, a V-shaped distribution pattern) within the area in which the single groove structure 82 is formed and the at least two target irradiation areas EA move along the direction along which the groove structure 82 extend. As a result, the single groove structure 82 is formed by the at least two processing lights EL.

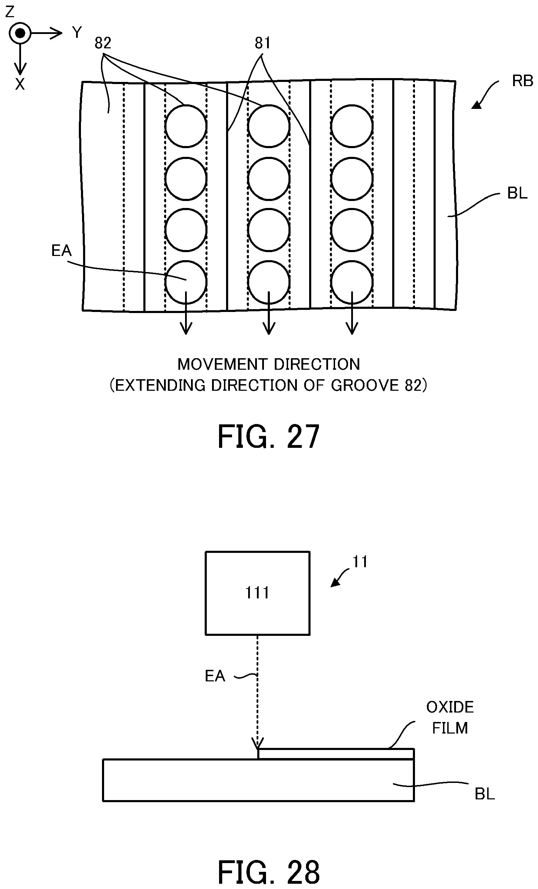

The processing system SYS may perform an operation for forming the single groove structure 82 by using at least two first processing lights EL in parallel with an operation for forming the single groove structure 82 by using at least two second processing lights EL. For example, as illustrated in FIG. 27 that is a planar view illustrating the plurality of processing lights EL with which the turbine blade BL is irradiated, the processing system SYS may perform a first operation for irradiating the turbine blade BL with the at least two first processing lights EL so that at least two first target irradiation areas EA that are irradiated with the at least two first processing lights EL, respectively, are arranged along a direction along which the groove structure 82 extends (the X-axis direction in the example illustrated in FIG. 27) and the at least two first target irradiation areas EA move along the direction along which the groove structure 82 extends. Furthermore, the processing system SYS may perform, in parallel with the first operation, a second operation for irradiating the turbine blade BL with the at least two second processing lights EL so that at least two second target irradiation areas EA that are irradiated with the at least two second processing lights EL, respectively, are arranged along the direction along which the groove structure 82 extends and the at least two second target irradiation areas EA move along the direction along which the groove structure 82 extends.

The intensities (for example, the intensities on the surface of the turbine blade BL) of the plurality of processing lights EL may be equal to each other. Alternatively, the intensities of at least two of the plurality of processing lights EL may be different from each other. The shapes (for example, the shapes of the plurality of processing lights EL in a plane intersecting with the propagating direction of the plurality of processing lights EL or in a plane intersecting with the optical axis of the processing optical system 111) of the plurality of processing lights EL may be same as each other. Alternatively, the shapes of at least two of the plurality of processing lights EL may be different from each other.

### (5-2) Second Modified Example

In a case where the processing system SYS processes the turbine blade BL by irradiating the turbine blade BL (alternatively, any workpiece W, the same in the below-described description) with the processing light EL, an oxide film (for example, an oxide film containing at least one of Fe₃O₄ and Fe₂O₃) may be formed on the surface of the processed turbined blade BL. In this case, the processing system SYS may perform a post-processing for removing the oxide film after processing the turbine blade BL (for example, after forming the riblet structure RB). For example, as illustrated in FIG. 28 that schematically illustrates the processing system SYS performing the post-processing, the processing system SYS may perform, as the post-processing, a removal processing for removing the oxide film by irradiating the oxide film with processing light EL.

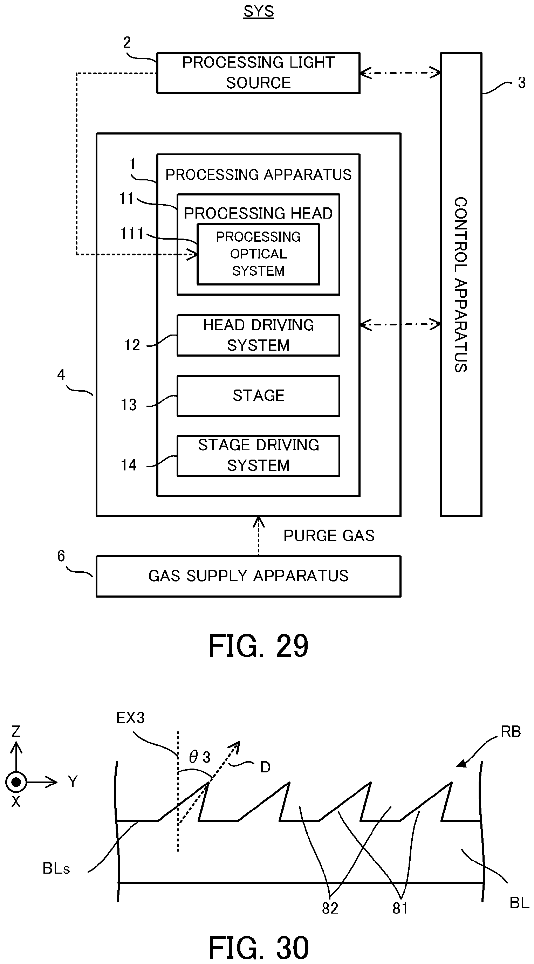

Alternatively, the processing system SYS may process the turbine blade BL so that the oxide film is less likely to be formed on the surface of the processed turbine blade BL. For example, one of reasons why the oxide film is formed on the surface of the processed turbine blade BL is oxygen existing in the inner space of the housing 4 in which the turbine blade BL is processed. Thus, the processing system SYS may purge the inner space of the housing 4 with a purge gas different from oxygen and process the turbine blade BL in the inner space of the housing 4 purged with the purge gas. In this case, the processing system SYS may include a gas supply apparatus 6 that supplies the purge gas into the inner space of the housing 4, as illustrated in FIG. 29.

Note that the purge gas may include inert gas. The inert gas may include at least one of nitrogen gas and argon gas, for example.

### (5-2) Other Modified Example

In the above-described description, the processing apparatus 1 includes the head driving system 12. However, the processing apparatus 1 may not include the head driving system 12. Namely, the processing head 11 may not be movable. Moreover, in the above-described description, the processing apparatus 1 includes the stage driving system 14. However, the processing apparatus 1 may not include the stage driving system 14. Namely, the stage 13 may not be movable.

In the above-described description, the example in which the processing apparatus 1 forms the riblet structure RB on the metallic workpiece W (namely, the base member) and the example in which the processing apparatus 1 forms the riblet structure RB on a coat coating the surface of the workpiece W are described. However, the processing performed by processing apparatus 1 is not limited to the examples described above. For example, the processing apparatus 1 may form the riblet structure RB on the surface of the workpiece W, and the surface of the workpiece W on which the riblet structure RB has been formed may be coated with a coat. For example, in a case where the processing apparatus 1 forms the riblet structure RB on the coat coating on the surface of the workpiece W, the coat on which the riblet structure RB has been formed may be further coated with another coat. In both examples, the riblet structure RB may be coated with the coat. In this case, a thickness of the coat may be determined so that the function of the riblet structure RB is not reduced by the coat coating the riblet structure RB. For example, the thickness of the coat may be determined so that the riblet structure RB is not buried in the coat, because there is a possibility that the function of the riblet structure RB is reduced by the coat in a case where the riblet structure RB is buried in the coat. The coat may be formed along the shape of the riblet structure RB (for example, along the convex structure 81 or the groove structure 82) so that the function of the riblet structure RB is not reduced by the coat coating the riblet structure RB.

The processing apparatus 1 may form the riblet structure RB on the surface of a film by using the workpiece W on the surface of which the film is formed. The film may be a resinous film, a metallic film, or a film made from another material.

A material of the coat (alternatively, the film) described above may be a material including at least one of CrN, TiN, TiLN, Y₂O₃, ZrO₂, MCrALY (alternatively, MCrAlY), NiCr, Wc (alternatively, WC), Al₂O₃-TiO₂, Cr₂O₃ and soluble aluminum or may be any other material. The coat coating the surface of the metal workpiece W may have a plurality of layers. In this case, the material of a first layer of the plurality of layers may be the same as or different from the material of a second layer, which is different from the first layer, of the plurality of layers. For example, the material of at least one of the first layer and the second layer may include or may not include at least one of CrN, TiN, TiLN, Y₂O₃, ZrO₂, MCrALY (alternatively, MCrAlY), NiCr, Wc (alternatively, WC), Al₂O₃-TiO₂, Cr₂O₃ and soluble aluminum.

An effect caused by coating the workpiece W with the coat (especially, an effect on the workpiece W) may include at least one of an effect of protecting the workpiece W, an effect of improving a heat shielding property of the workpiece W, an effect of improving a heat resistance of the workpiece W, an effect of improving a corrosion resistance of the workpiece W, an effect of improving an wear resistance of the workpiece W, and an effect of improving an oxidation resistance of the workpiece W. An effect caused by forming the coat on the riblet structure RB (namely, an effect realized by the coat) may include at least one of an effect of protecting the riblet structure RB, an effect of improving a heat shielding property of the riblet structure RB, an effect of improving a heat resistance of the riblet structure RB, an effect of improving a corrosion resistance of the riblet structure RB, an effect of improving an wear resistance of the riblet structure RB, and an effect of improving an oxidation resistance of the riblet structure RB. An effect caused by forming the plurality of layers of different materials on the workpiece W (for example, forming the coat including the plurality of layers of different materials) may include an anti-peeling effect. For example, the coat formed on the workpiece W may be selected based on a difference in a characteristic of thermal expansion between the coat close to the workpiece W and the workpiece W, and a difference in a characteristic of thermal expansion between the coat far from the workpiece W and the workpiece W. In a case where the difference in the characteristic of the thermal expansion between the coat close to the workpiece W and the workpiece W is smaller than the difference in the characteristic of the thermal expansion between the coat far from the workpiece W (for example, the coat on which the riblet structure RB is formed) and the workpiece W, it is possible to prevent the riblet structure RB from being peeled due to a spreading of the coat by heat.

In the above-described description, the processing system SYS forms the riblet structure RB that has the function of reducing the resistance of the surface of the workpiece W to the fluid. However, the processing system SYS may form, on the workpiece W, a structure that has a function different from the function of reducing the resistance of the surface of the workpiece W to the fluid. For example, the processing system SYS may form, on the workpiece W, a riblet structure that reduces noise generated when the fluid and the surface of the workpiece W relative move. For example, the processing system SYS may form, on the workpiece W, a riblet structure that generates swirl relative to the flow of the fluid on the surface of the workpiece W. For example, the processing system SYS may form, on the workpiece W, a structure that provides hydrophobic property to the surface of the workpiece W.

In the above described description, the processing system SYS forms the riblet structure RB on the surface of the workpiece W. However, the processing system SYS may form any structure having any shape on the surface of the workpiece W. A structure that generates a swirl relative to a flow of the fluid on the surface of the workpiece W is one example of any structure. A structure that provides hydrophobic property to the surface of the workpiece W is one example of any structure. A fine texture structure (typically, a concave and convex structure including a land structure and a groove structure) that is formed regularly or irregularly in a micro / nano-meter order is one example of any structure. The fine texture structure may include at least one of a shark skin structure or a dimple structure that has a function of reducing a resistance from a fluid (a liquid and / or a gas). The fine texture structure may include a lotus leaf surface structure that has at least one of a liquid repellent function and a self-cleaning function (for example, has a lotus effect). The fine texture structure may include at least one of a fine protrusion structure that has a liquid transporting function (US2017/0044002A1), a concave and convex structure that has a lyophile effect, a concave and convex structure that has an antifouling effect, a moth eye structure that has at least one of a reflectance reduction function and a liquid repellent function, a concave and convex structure that intensifies only light of a specific wavelength by interference to have a structural color, a pillar array structure that has an adhesion function using van der Waals force, a concave and convex structure that has an aerodynamic noise reduction function, a honeycomb structure that has a droplet collection function, a concave and convex structure that improves an adherence to a layer formed on a surface, a concave and convex structure for reducing a friction resistance, and so on. Even in this case, the convex structure included in the concave and convex structure may have a structure that is same as that of the convex structure 81 included in the riblet structure RB described above. The groove structure included in the concave and convex structure may have a structure that is same as that of the groove structure 82 included in the riblet structure RB described above. Note that the fine texture structure may not have any function.

In the above described description, the processing system SYS processes the workpiece W by irradiating the workpiece W with the processing lights EL. However, the processing system SYS may process the workpiece W by irradiating the workpiece W with any energy beam that is different from the light. In this case, the processing system SYS may include a beam irradiation apparatus that is configured to emit any energy beam in addition to or instead of the processing light source 2. At least one of a charged particle beam, an electromagnetic wave and the like is one example of any energy beam. A least one of an electron beam, an ion beam and the like is one example of the charged particle beam.

### (6) Modified Example of Riblet Structure RB

In the above description, as illustrated in FIG. 6A and FIG. 6B, the convex structures 81 of the riblet structure RB protrudes directly upward from the riblet structure surface BLs. However, as illustrated in FIG. 30 that is a cross-sectional view illustrating a modified example of the riblet structure RB, the convex structure 81 may protrude obliquely upward from the riblet structure surface BLs. For example, the convex structure 81 may protrude obliquely upward from the riblet structure surface BLs so that an angle θ3 between a direction D along which the convex structure 81 protrude and the axis EX2 that is along the Z-axis direction (namely, a direction along which the convex structure 81 protrude) is larger than 0 degrees and is equal to or smaller than 30 degrees. Note that the direction D along which the convex structure 81 protrudes may be a direction connecting a center of a bottom part of the convex structure 81 and the tip of the convex structure 81.

The processing system SYS may form the convex structure 81 that protrudes obliquely upward from the riblet structure surface BLs, in a case where an incident angle of the processing light EL relative to the riblet structure surface BLs is restricted. For example, the processing system SYS may form the convex structure 81 that protrudes obliquely upward from the riblet structure surface BLs, in a case where the riblet structure surface BLs cannot be irradiated with the processing light EL vertically entering the riblet structure surface BLs. For example, the processing system SYS may form the convex structure 81 that protrudes obliquely upward from the riblet structure surface BLs, in a case where the processing light EL vertically entering the riblet structure surface BLs is shielded by an obstacle or the like (namely, a vignetting occurs) before reaching the riblet structure surface BLs. However, the processing system SYS may form the convex structure 81 that protrudes obliquely upward from the riblet structure surface BLs, even in a case where the incident angle of the processing light EL relative to the riblet structure surface BLs is not restricted.

The riblet structure RB including the convex structure 81 that protrudes obliquely upward from the riblet structure surface BLs may also be manufactured by using the mold ML. In this case, the convex structure 71 formed on the mold surface MLs of the mold ML may protrude obliquely upward from the mold surface MLs. For example, the convex structure 71 may protrude obliquely upward from the mold surface MLs so that an angle between a direction along which the convex structure 71 protrudes and the axis EX1 that is along the Z-axis direction (namely, a direction along which the convex structure 71 protrudes) is larger than 0 degrees and is equal to or smaller than 30 degrees. The direction along which the convex structure 71 protrudes may be a direction connecting a center of a bottom part of the convex structure 71 and the tip of the convex structure 71.

### (7) Supplementary Note

Regarding the above-described embodiment, below-described supplementary notes are further disclosed.

### [Supplementary Note 1]

A mold that is used to mold, by an injection molding using a meltable material, an injection molded product having a blade that is placed in fluid, wherein
the mold includes a mold surface that contacts the material,
on the mold surface, a plurality of convex structures, each of which extends along a first direction and each of which protrudes toward a second direction that intersects with the first direction, are formed to be arranged along a third direction that intersects with the first direction and the second direction,
at least one of a corner part of a first convex structure among the plurality of convex structures and a boundary part between the first convex structure and a second convex structure, which are adjacent to each other along the third direction, among the plurality of convex structures includes a curved surface,
in a case where a radius of curvature of the curved surface included in at least one of the corner part and the boundary part is R, a pitch of the plurality of convex structures is P, and a height from the boundary part of the plurality of convex structures protruding toward the second direction is H, a first condition "1 micrometer < R < 4 micrometers" is satisfied, and at least one of a second condition "5 micrometers < P < 200 micrometers" and a third condition "2.5 micrometers < H < 100 micrometers" is satisfied.

### [Supplementary Note 2]

The mold according to Supplementary Note 1, wherein
the injection molded product includes a riblet structure surface molded by the plurality of convex structures,
a resistance relative to the fluid is reducible by the riblet structure surface.

### [Supplementary Note 3]

The mold according to Supplementary Note 1 or 2, wherein
a fourth condition "2 micrometers < R < 3 micrometers" is satisfied.

### [Supplementary Note 4]

The mold according to any one of Supplementary Notes 1 to 3, wherein
the injection molded product is a member that is used in a fan, an impeller, a propeller, a turbine, or a pump.

### [Supplementary Note 5]

The mold according to any one of Supplementary Notes 1 to 4, wherein
the first convex structure includes a pair of first side surfaces that face opposite directions,
the corner part connects the pair of first side surfaces through edge parts of the pair of first side surfaces.

### [Supplementary Note 6]

The mold according to any one of Supplementary Notes 1 to 5, wherein
the first convex structure includes a second side surface that faces the second convex structure,
the second convex structure includes a third side surface that faces the first convex structure,
the boundary part connects the second side surface and the third side surface through an edge part of the second side surface and an edge part of the third side surface.

### [Supplementary Note 7]

The mold according to any one of Supplementary Notes 1 to 6, wherein
the plurality of convex structures are formed to be arranged along the mold surface.

### [Supplementary Note 8]

The mold according to Supplementary Note 7, wherein
the mold surface includes:
a first area in which the plurality of convex structures are formed;
a second area in which the plurality of convex structures are not formed; and
a third area which is located between the first area and the second area along the first direction and in which a plurality of other convex structures respectively connected to the plurality of convex structures are formed,
the plurality of other convex structures extend from the first area toward the second area,
a height of at least one of the plurality of other convex structures becomes lower as at least one of the plurality of the convex structures is closer to the second area.

### [Supplementary Note 9]

The mold according to Supplementary Note 7 or 8, wherein
the mold surface includes:
a first area in which the plurality of convex structures are formed;
a fourth area in which the plurality of convex structures are not formed; and
a fifth area which is located between the first area and the fourth area along the third direction,
an inclination angle between a surface of the fifth area and an axis along the second direction is larger than an inclination angle between side surfaces of the plurality of convex structures and an axis along the second direction.

### [Supplementary Note 10]

The mold according to any one of Supplementary Notes 7 to 9, wherein
the radius of curvature of the curved surface at a first part of the mold surface is different from the radius of curvature of the curved surface at a second part of the mold surface that is different from the first part.

### [Supplementary Note 11]

The mold according to Supplementary Note 10, wherein
the radius of curvature of the curved surface at the first part is larger than the radius of curvature of the curved surface at the second part in a case where a density of the convex structures formed at the first part is higher than a density of the convex structures formed at the second part.

### [Supplementary Note 12]

The mold according to Supplementary Note 10 or 11, wherein
the radius of curvature of the curved surface at the first part is larger than the radius of curvature of the curved surface at the second part in a case where a temperature of the first part is lower than a temperature of the second part in a period during which the injection molding is performed.

### [Supplementary Note 13]

The mold according to any one of Supplementary Notes 1 to 12, wherein
a height of at least one of the plurality of convex structures is equal to or smaller than a pitch of the plurality of convex structures.

### [Supplementary Note 14]

The mold according to any one of Supplementary Notes 1 to 13, wherein
a height of at least one of the plurality of convex structures is equal to or smaller than a half of a pitch of the plurality of convex structures.

### [Supplementary Note 15]

The mold according to any one of Supplementary Notes 1 to 14, wherein
the plurality of convex structures are arranged along the third direction with regularity.

### [Supplementary Note 16]

The mold according to any one of Supplementary Notes 1 to 15, wherein
the plurality of convex structures are a plurality of fourth convex structures,
a riblet structure, in which a plurality of fifth convex structures each of which extends along a fifth direction and each of which protrudes from the structure surface are formed to be arranged along a six direction that is along the structure surface and that intersects with the fifth direction, is formed on a structure surface that is a surface of the injection molded product,
a plurality of grooves each of which extends along the first direction are formed between the plurality of fourth convex structures to be arranged along the third direction,
the plurality of fifth convex structures are formed by the molten material flowing into the plurality of grooves, respectively.

### [Supplementary Note 17]

The mold according to any one of Supplementary Notes 1 to 16, wherein
a direction along which the blade is removed from the mold is a direction based on directions along which the plurality of convex structures extend.

### [Supplementary Note 18]

The mold according to any one of Supplementary Notes 1 to 17, wherein
a direction along which the blade is removed from the mold is a direction based on a direction that is an average of directions along which the plurality of convex structures extend.

### [Supplementary Note 19]

A mold that is used to mold a molded product with a meltable material, wherein
the mold includes a mold surface that contacts the material,
on the mold surface, a plurality of convex structures, each of which extends along a first direction and each of which protrudes toward a second direction that intersects with the first direction, are formed to be arranged along a third direction that intersects with the first direction and the second direction,
at least one of a corner part of a first convex structure among the plurality of convex structures and a boundary part between the first convex structure and a second convex structure, which are adjacent to each other along the third direction, among the plurality of convex structures includes a curved surface.

### [Supplementary Note 20]

A mold that is used to mold a molded product with a meltable material, wherein
the mold includes a mold surface that contacts the material,
on the mold surface, a plurality of groove structures, each of which extends along a first direction and each of which is depressed toward a second direction that intersects with the first direction, are formed to be arranged along a third direction that intersects with the first direction and the second direction,
a bottom part of a first groove structure among the plurality of groove structures includes a curved surface part.

### [Supplementary Note 21]

A mold that is used to mold a molded product with a meltable material, wherein
the mold includes a mold surface that contacts the material,
on the mold surface, a plurality of groove structures, each of which extends along a first direction and each of which is depressed in a second direction that intersects with the first direction, are formed to be arranged along a third direction that intersects with the first direction and the second direction,
a shape of each of the plurality of groove structures is a triangular shape.

### [Supplementary Note 22]

A mold that is used to mold a molded product with a meltable material, wherein
the mold includes a mold surface that contacts the material,
on the mold surface, a plurality of convex structures, each of which extends along a first direction and each of which protrudes toward a second direction that intersects with the first direction, are formed to be arranged along a third direction that intersects with the first direction and the second direction,
a first convex structure of the plurality of convex structures includes a first slope part and a second slope part,
a second convex structure of the plurality of convex structures includes a third slope part and a fourth slope part,
at least one of a corner part that connects the first slope part and the second slope part and a boundary part that connects the second slope part and the third slope part includes a curved surface.

### [Supplementary Note 23]

A mold that is used to mold a molded product with a meltable material, wherein
the mold includes a mold surface that contacts the material,
on the mold surface, a plurality of convex structures, each of which extends along a first direction and each of which protrudes toward a second direction that intersects with the first direction, are formed to be arranged along a third direction that intersects with the first direction and the second direction,
at least one of a corner part of a first convex structure among the plurality of convex structures and a boundary part between the first convex structure and a second convex structure, which are adjacent to each other along the third direction, among the plurality of convex structures includes a curved surface.

### [Supplementary Note 24]

A mold that is used to mold a molded product with a meltable material, wherein
the mold includes a mold surface that contacts the material,
on the mold surface, a plurality of convex structures, each of which extends along a first direction and each of which protrudes toward a second direction that intersects with the first direction, are formed to be arranged along a third direction that intersects with the first direction and the second direction,
the mold surface includes:
   a first area in which the plurality of convex structures are formed;
   a second area in which the plurality of convex structures are not formed; and
   a third area which is located between the first area and the second area along the first direction and in which a plurality of other convex structures respectively connected to the plurality of convex structures are formed,
   the plurality of other convex structures extend from the first area toward the second area,
   a height of at least one of the plurality of other convex structures becomes lower as at least one of the plurality of the convex structures is closer to the second area.

### [Supplementary Note 25]

A mold that is used to mold a molded product with a meltable material, wherein
the mold includes a mold surface that contacts the material,
on the mold surface, a plurality of convex structures, each of which extends along a first direction and each of which protrudes toward a second direction that intersects with the first direction, are formed to be arranged along a third direction that intersects with the first direction and the second direction,
the mold surface includes:
   a first area in which the plurality of convex structures are formed;
   a fourth area in which the plurality of convex structures are not formed; and
   a fifth area which is located between the first area and the fourth area along the third direction,
   an inclination angle between a surface of the fifth area and an axis along the second direction is larger than an inclination angle between side surfaces of the plurality of convex structures and an axis along the second direction.

### [Supplementary Note 26]

The mold according to any one of Supplementary Notes 19 to 25, wherein
the molded product is at least a part of a fan, an impeller, a propeller, a turbine, or a pump.

### [Supplementary Note 27]

The mold according to Supplementary Note 26, wherein
the molded product is at least a blade member or a wall member of a fan, an impeller, a propeller, a turbine, or a pump.

### [Supplementary Note 28]

A molded product molded by using a mold, wherein
a plurality of convex structures, each of which extends along a first direction and each of which protrudes toward a second direction that intersects with the first direction, are formed to be arranged along a third direction that intersects with the first direction and the second direction,
at least one of a corner part of a first convex structure among the plurality of convex structures and a boundary part between the first convex structure and a second convex structure, which are adjacent to each other along the third direction, among the plurality of convex structures includes a curved surface.

### [Supplementary Note 29]

A blade member, wherein
a plurality of convex structures, each of which extends along a first direction and each of which protrudes toward a second direction that intersects with the first direction, are formed to be arranged along a third direction that intersects with the first direction and the second direction,
the blade member includes:
   a first area in which the plurality of convex structures are formed;
   a second area in which the plurality of convex structures are not formed; and
   a third area which is located between the first area and the second area along the first direction and in which a plurality of other convex structures respectively connected to the plurality of convex structures are formed,
   the plurality of other convex structures extend from the first area toward the second area,
   a height of at least one of the plurality of other convex structures becomes lower as it is closer to the second area,
   in a case where a pitch of the plurality of convex structures is P, and a height of the plurality of convex structures protruding toward the second direction is H, at least one of a first condition "5 micrometers < P < 200 micrometers" and a second condition "2.5 micrometers < H < 100 micrometers" is satisfied.

### [Supplementary Note 30]

A blade member, wherein
a plurality of convex structures, each of which extends along a first direction and each of which protrudes toward a second direction that intersects with the first direction, are formed to be arranged along a third direction that intersects with the first direction and the second direction,
the blade member includes:
   a first area in which the plurality of convex structures are formed;
   a fourth area in which the plurality of convex structures are not formed; and
   a fifth area which is located between the first area and the fourth area along the third direction,
   an inclination angle between a surface of the fifth area and an axis along the second direction is larger than an inclination angle between side surfaces of the plurality of convex structures and an axis along the second direction,
   in a case where a pitch of the plurality of convex structures is P, and a height of the plurality of convex structures protruding toward the second direction is H, at least one of a first condition "5 micrometers < P < 200 micrometers" and a second condition "2.5 micrometers < H < 100 micrometers" is satisfied.

### [Supplementary Note 31]

The blade member according to Supplementary Note 29 or 30, wherein
the blade member is at least a part of a fan, an impeller, a propeller, a turbine, or a pump.

### [Supplementary Note 32]

The blade member according to Supplementary Note 31, wherein
the blade member is a member that is at least a part of a fan, an impeller, a propeller, a turbine, or a pump.

### [Supplementary Note 33]

A component that is placed in fluid, wherein
a plurality of convex structures, each of which extends along a first direction and each of which protrudes toward a second direction that intersects with the first direction, are formed to be arranged along a third direction that intersects with the first direction and the second direction,
the component includes:
   a first area in which the plurality of convex structures are formed;
   a second area in which the plurality of convex structures are not formed; and
   a third area which is located between the first area and the second area along the first direction and in which a plurality of other convex structures respectively connected to the plurality of convex structures are formed,
   the plurality of other convex structures extend from the first area toward the second area,
   a height of at least one of the plurality of other convex structures becomes lower as it is closer to the second area.

### [Supplementary Note 34]

A component that is placed in fluid, wherein
a plurality of convex structures, each of which extends along a first direction and each of which protrudes toward a second direction that intersects with the first direction, are formed to be arranged along a third direction that intersects with the first direction and the second direction,
the component includes:
   a first area in which the plurality of convex structures are formed;
   a fourth area in which the plurality of convex structures are not formed; and
   a fifth area which is located between the first area and the fourth area along the third direction,
   an inclination angle between a surface of the fifth area and an axis along the second direction is larger than an inclination angle between side surfaces of the plurality of convex structures and an axis along the second direction.

### [Supplementary Note 35]

The component according to Supplementary Note 33 or 34, wherein
the component is at least a part of a fan, an impeller, a propeller, a turbine, or a pump.

### [Supplementary Note 36]

The component according to Supplementary Note 35, wherein
the component is at least a blade member or a wall member of a fan, an impeller, a propeller, a turbine, or a pump.

### [Supplementary Note 37]

A manufacturing method for manufacturing a mold, wherein
the mold is used to mold, by an injection molding using a meltable material, an injection molded product having a blade that is placed in fluid, wherein
the mold includes a mold surface that contacts the material,
the manufacturing method forms, on the mold surface, a plurality of convex structures, each of which extends along a first direction and each of which protrudes toward a second direction that intersects with the first direction, to be arranged along a third direction that intersects with the first direction and the second direction,
the manufacturing method forms the plurality of convex structures so that at least one of a corner part of a first convex structure among the plurality of convex structures and a boundary part between the first convex structure and a second convex structure, which are adjacent to each other along the third direction, among the plurality of convex structures includes a curved surface,
in a case where a radius of curvature of the curved surface included in at least one of the corner part and the boundary part is R, a pitch of the plurality of convex structures is P, and a height from the boundary part of the plurality of convex structures protruding toward the second direction is H, the manufacturing method forms the plurality of convex structures so that a first condition "1 micrometer < R < 4 micrometers" is satisfied, and at least one of a second condition "5 micrometers < P < 200 micrometers" and a third condition "2.5 micrometers < H < 100 micrometers" is satisfied.

### [Supplementary Note 38]

A manufacturing method for manufacturing a mold, wherein
the mold is used to mold a molded product with a meltable material, wherein
the mold includes a mold surface that contacts the material,
the manufacturing method forms, on the mold surface, a plurality of convex structures, each of which extends along a first direction and each of which protrudes toward a second direction that intersects with the first direction, are formed to be arranged along a third direction that intersects with the first direction and the second direction,
the manufacturing method forms the plurality of convex structures so that at least one of a corner part of a first convex structure among the plurality of convex structures and a boundary part between the first convex structure and a second convex structure, which are adjacent to each other along the third direction, among the plurality of convex structures includes a curved surface.

### [Supplementary Note 39]

A manufacturing method for manufacturing a mold, wherein
the mold is a mold that used to mold a molded product with a meltable material, wherein
the mold includes a mold surface that contacts the material,
the manufacturing method forms, on the mold surface, a plurality of groove structures, each of which extends along a first direction and each of which is depressed in a second direction that intersects with the first direction, are formed to be arranged along a third direction that intersects with the first direction and the second direction,
the manufacturing method forms the plurality of groove structures so that a bottom part of a first groove structure among the plurality of groove structures includes a curved surface part.

### [Supplementary Note 40]

A manufacturing method for manufacturing a mold, wherein
the mold is a mold that used to mold a molded product with a meltable material, wherein
the mold includes a mold surface that contacts the material,
the manufacturing method forms, on the mold surface, a plurality of groove structures, each of which extends along a first direction and each of which is depressed in a second direction that intersects with the first direction, are formed to be arranged along a third direction that intersects with the first direction and the second direction,
the manufacturing method forms the plurality of groove structures so that a shape of each of the plurality of groove structures is a trapezoidal shape.

### [Supplementary Note 41]

A manufacturing method for manufacturing a mold, wherein
the mold is a mold that is used to mold a molded product with a meltable material, wherein
the mold includes a mold surface that contacts the material,
the manufacturing method forms, on the mold surface, a plurality of convex structures, each of which extends along a first direction and each of which protrudes toward a second direction that intersects with the first direction, are formed to be arranged along a third direction that intersects with the first direction and the second direction,
a first convex structure of the plurality of convex structures includes a first slope part and a second slope part,
a second convex structure of the plurality of convex structures includes a third slope part and a fourth slope part,
the manufacturing method forms the plurality of convex structures so that at least one of a corner part that connects the first slope part and the second slope part and a boundary part that connects the second slope part and the third slope part includes a curved surface.

### [Supplementary Note 42]

A manufacturing method for manufacturing a mold, wherein
the mold is a mold that is used to mold a molded product with a meltable material, wherein
the mold includes a mold surface that contacts the material,
the manufacturing method forms, on the mold surface, a plurality of convex structures, each of which extends along a first direction and each of which protrudes toward a second direction that intersects with the first direction, are formed to be arranged along a third direction that intersects with the first direction and the second direction,
the manufacturing method forms the plurality of convex structures so that at least one of a corner part of a first convex structure among the plurality of convex structures and a boundary part between the first convex structure and a second convex structure, which are adjacent to each other along the third direction, among the plurality of convex structures includes a curved surface.

### [Supplementary Note 43]

A manufacturing method for manufacturing a molded product by using a mold, wherein
the manufacturing method forms a plurality of convex structures, each of which extends along a first direction and each of which protrudes toward a second direction that intersects with the first direction, are formed to be arranged along a third direction that intersects with the first direction and the second direction,
the manufacturing method forms the plurality of convex structures so that at least one of a corner part of a first convex structure among the plurality of convex structures and a boundary part between the first convex structure and a second convex structure, which are adjacent to each other along the third direction, among the plurality of convex structures includes a curved surface.

### [Supplementary Note 44]

A manufacturing method for manufacturing a blade member, wherein
the manufacturing method forms a plurality of convex structures, each of which extends along a first direction and each of which protrudes toward a second direction that intersects with the first direction, are formed to be arranged along a third direction that intersects with the first direction and the second direction,
the manufacturing method forms the plurality of convex structures and a plurality of other convex structures so that the blade member includes: a first area in which the plurality of convex structures are formed; a second area in which the plurality of convex structures are not formed; and a third area which is located between the first area and the second area along the first direction and in which the plurality of other convex structures respectively connected to the plurality of convex structures are formed,
the manufacturing method forms the plurality of other convex structures so that the plurality of other convex structures extend from the first area toward the second area and a height of at least one of the plurality of other convex structures becomes lower as it is closer to the second area,
in a case where a pitch of the plurality of convex structures is P, and a height of the plurality of convex structures protruding toward the second direction is H, the manufacturing method forms the plurality of convex structures so that at least one of a first condition "5 micrometers < P < 200 micrometers" and a second condition "2.5 micrometers < H < 100 micrometers" is satisfied.

### [Supplementary Note 45]

A manufacturing method for manufacturing a blade member, wherein
the manufacturing method forms a plurality of convex structures, each of which extends along a first direction and each of which protrudes toward a second direction that intersects with the first direction, are formed to be arranged along a third direction that intersects with the first direction and the second direction,
the manufacturing method forms the plurality of convex structures so that the blade member includes: a first area in which the plurality of convex structures are formed; a fourth area in which the plurality of convex structures are not formed; and a fifth area which is located between the first area and the fourth area along the third direction,
the manufacturing method forms the plurality of convex structures so that an inclination angle between a surface of the fifth area and an axis along the second direction is larger than an inclination angle between side surfaces of the plurality of convex structures and an axis along the second direction,
in a case where a pitch of the plurality of convex structures is P, and a height of the plurality of convex structures protruding toward the second direction is H, the manufacturing method forms the plurality of convex structures so that at least one of a first condition "5 micrometers < P < 200 micrometers" and a second condition "2.5 micrometers < H < 100 micrometers" is satisfied.

### [Supplementary Note 46]

A manufacturing method for manufacturing a component that is placed in fluid, wherein
the manufacturing method forms a plurality of convex structures, each of which extends along a first direction and each of which protrudes toward a second direction that intersects with the first direction, are formed to be arranged along a third direction that intersects with the first direction and the second direction,
the manufacturing method forms the plurality of convex structures and a plurality of other convex structures so that the component includes: a first area in which the plurality of convex structures are formed; a second area in which the plurality of convex structures are not formed; and a third area which is located between the first area and the second area along the first direction and in which the plurality of other convex structures respectively connected to the plurality of convex structures are formed,
the manufacturing method forms the plurality of other convex structures so that the plurality of other convex structures extend from the first area toward the second area and a height of at least one of the plurality of other convex structures becomes lower as it is closer to the second area,
in a case where a pitch of the plurality of convex structures is P, and a height of the plurality of convex structures protruding toward the second direction is H, the manufacturing method forms the plurality of convex structures so that at least one of a first condition "5 micrometers < P < 200 micrometers" and a second condition "2.5 micrometers < H < 100 micrometers" is satisfied.

### [Supplementary Note 47]

A manufacturing method for manufacturing a component that is placed in fluid, wherein
the manufacturing method forms a plurality of convex structures, each of which extends along a first direction and each of which protrudes toward a second direction that intersects with the first direction, are formed to be arranged along a third direction that intersects with the first direction and the second direction,
the manufacturing method forms the plurality of convex structures so that the component includes: a first area in which the plurality of convex structures are formed; a fourth area in which the plurality of convex structures are not formed; and a fifth area which is located between the first area and the fourth area along the third direction,
the manufacturing method forms the plurality of convex structures so that an inclination angle between a surface of the fifth area and an axis along the second direction is larger than an inclination angle between side surfaces of the plurality of convex structures and an axis along the second direction,
in a case where a pitch of the plurality of convex structures is P, and a height of the plurality of convex structures protruding toward the second direction is H, the manufacturing method forms the plurality of convex structures so that at least one of a first condition "5 micrometers < P < 200 micrometers" and a second condition "2.5 micrometers < H < 100 micrometers" is satisfied.

The features of each example embodiment described above may be appropriately combined with each other. A part of the features of each example embodiment described above may not be used. The features of each example embodiment described above may be appropriately replaced by the features of another example embodiment. Moreover, the disclosures of all publications and United States patents related to an apparatus and the like cited in each embodiment described above are incorporated in the disclosures of the present application by reference if it is legally permitted.

The present invention is not limited to the above described examples and is allowed to be changed, if desired, without departing from the essence or spirit of the invention which can be read from the claims and the entire specification, and a mold, a molded product, a blade member, a component, and a manufacturing method, which involve such changes, are also intended to be within the technical scope of the present invention.

### Description of Reference Codes

1 processing apparatus
5 design apparatus
W workpiece
BL turbine blade
BLs riblet structure surface
RB riblet structure
81 convex structure
811, 812side surface
813 corner part
814 boundary part
82 groove structure
ML mold
MLs mold surface
SP mold space
MB mold structure
711, 712side surface
713 corner part
714 boundary part
72 groove structure
W11, W111, W112, W211, W212 forming area
W12, W121, W122, W221, W222 non-forming area
W13, W131, W132, W231, W232 terminal area
TB, TB1, TB2 terminal structure

## Claims

1. A mold that is used to mold, by an injection molding using a meltable material, an injection molded product having a blade that is placed in fluid, wherein
the mold comprises a mold surface that contacts the material,
on the mold surface, a plurality of convex structures, each of which extends along a first direction and each of which protrudes toward a second direction that intersects with the first direction, are formed to be arranged along a third direction that intersects with the first direction and the second direction,
at least one of a corner part of a first convex structure among the plurality of convex structures and a boundary part between the first convex structure and a second convex structure, which are adjacent to each other along the third direction, among the plurality of convex structures includes a curved surface,
in a case where a radius of curvature of the curved surface included in at least one of the corner part and the boundary part is R, a pitch of the plurality of convex structures is P, and a height from the boundary part of the plurality of convex structures protruding toward the second direction is H, a first condition "1 micrometer < R < 4 micrometers" is satisfied, and at least one of a second condition "5 micrometers < P < 200 micrometers" and a third condition "2.5 micrometers < H < 100 micrometers" is satisfied.

2. The mold according to claim 1, wherein
the injection molded product includes a riblet structure surface molded by the plurality of convex structures,
a resistance relative to the fluid is reducible by the riblet structure surface.

3. The mold according to claim 1 or 2, wherein
a fourth condition "2 micrometers < R < 3 micrometers" is satisfied.

4. The mold according to any one of claims 1 to 3, wherein
the injection molded product is a member that is used in a fan, an impeller, a propeller, a turbine, or a pump.

5. The mold according to any one of claims 1 to 4, wherein
the first convex structure includes a pair of first side surfaces that face opposite directions,
the corner part connects the pair of first side surfaces through edge parts of the pair of first side surfaces.

6. The mold according to any one of claims 1 to 5, wherein
the first convex structure includes a second side surface that faces the second convex structure,
the second convex structure includes a third side surface that faces the first convex structure,
the boundary part connects the second side surface and the third side surface through an edge part of the second side surface and an edge part of the third side surface.

7. The mold according to any one of claims 1 to 6, wherein
the plurality of convex structures are formed to be arranged along the mold surface.

8. The mold according to claim 7, wherein
the mold surface includes:
a first area in which the plurality of convex structures are formed;
a second area in which the plurality of convex structures are not formed; and
a third area which is located between the first area and the second area along the first direction and in which a plurality of other convex structures respectively connected to the plurality of convex structures are formed,
the plurality of other convex structures extend from the first area toward the second area,
a height of at least one of the plurality of other convex structures becomes lower as at least one of the plurality of the convex structures is closer to the second area.

9. The mold according to claim 7 or 8, wherein
the mold surface includes:
a first area in which the plurality of convex structures are formed;
a fourth area in which the plurality of convex structures are not formed; and
a fifth area which is located between the first area and the fourth area along the third direction,
an inclination angle between a surface of the fifth area and an axis along the second direction is larger than an inclination angle between side surfaces of the plurality of convex structures and an axis along the second direction.

10. The mold according to any one of claims 7 to 9, wherein
the radius of curvature of the curved surface at a first part of the mold surface is different from the radius of curvature of the curved surface at a second part of the mold surface that is different from the first part.

11. The mold according to claim 10, wherein
the radius of curvature of the curved surface at the first part is larger than the radius of curvature of the curved surface at the second part in a case where a density of the convex structures formed at the first part is higher than a density of the convex structures formed at the second part.

12. The mold according to claim 10 or 11, wherein
the radius of curvature of the curved surface at the first part is larger than the radius of curvature of the curved surface at the second part in a case where a temperature of the first part is lower than a temperature of the second part in a period during which the injection molding is performed.

13. The mold according to any one of claims 1 to 12, wherein
a height of at least one of the plurality of convex structures is equal to or smaller than a pitch of the plurality of convex structures.

14. The mold according to any one of claims 1 to 13, wherein
a height of at least one of the plurality of convex structures is equal to or smaller than a half of a pitch of the plurality of convex structures.

15. The mold according to any one of claims 1 to 14, wherein
the plurality of convex structures are arranged along the third direction with regularity.

16. The mold according to any one of claims 1 to 15, wherein
the plurality of convex structures are a plurality of fourth convex structures,
a riblet structure, in which a plurality of fifth convex structures each of which extends along a fifth direction and each of which protrudes from the structure surface are formed to be arranged along a six direction that is along the structure surface and that intersects with the fifth direction, is formed on a structure surface that is a surface of the injection molded product,
a plurality of grooves each of which extends along the first direction are formed between the plurality of fourth convex structures to be arranged along the third direction,
the plurality of fifth convex structures are formed by the molten material flowing into the plurality of grooves, respectively.

17. The mold according to any one of claims 1 to 16, wherein
a direction along which the blade is removed from the mold is a direction based on directions along which the plurality of convex structures extend.

18. The mold according to any one of claims 1 to 17, wherein
a direction along which the blade is removed from the mold is a direction based on a direction that is an average of directions along which the plurality of convex structures extend.

19. A blade member, wherein
a plurality of convex structures, each of which extends along a first direction and each of which protrudes toward a second direction that intersects with the first direction, are formed to be arranged along a third direction that intersects with the first direction and the second direction,
the blade member comprises:
a first area in which the plurality of convex structures are formed;
a second area in which the plurality of convex structures are not formed; and
a third area which is located between the first area and the second area along the first direction and in which a plurality of other convex structures respectively connected to the plurality of convex structures are formed,
the plurality of other convex structures extend from the first area toward the second area,
a height of at least one of the plurality of other convex structures becomes lower as it is closer to the second area,
in a case where a pitch of the plurality of convex structures is P, and a height of the plurality of convex structures protruding toward the second direction is H, at least one of a first condition "5 micrometers < P < 200 micrometers" and a second condition "2.5 micrometers < H < 100 micrometers" is satisfied.

20. A blade member, wherein
a plurality of convex structures, each of which extends along a first direction and each of which protrudes toward a second direction that intersects with the first direction, are formed to be arranged along a third direction that intersects with the first direction and the second direction,
the blade member comprises:
a first area in which the plurality of convex structures are formed;
a fourth area in which the plurality of convex structures are not formed; and
a fifth area which is located between the first area and the fourth area along the third direction,
an inclination angle between a surface of the fifth area and an axis along the second direction is larger than an inclination angle between side surfaces of the plurality of convex structures and an axis along the second direction,
in a case where a pitch of the plurality of convex structures is P, and a height of the plurality of convex structures protruding toward the second direction is H, at least one of a first condition "5 micrometers < P < 200 micrometers" and a second condition "2.5 micrometers < H < 100 micrometers" is satisfied.

21. The blade member according to claim 19 or 20, wherein
the blade member is at least a part of a fan, an impeller, a propeller, a turbine, or a pump.

22. The blade member according to claim 21, wherein
the blade member is a member that is at least a part of a fan, an impeller, a propeller, a turbine, or a pump.
